# EUROPEAN PATENT APPLICATION

(11) **EP 4 752 478 A1**
(43) Date of publication of application: **03.06.2026**
(21) Application number: 24849570.7
(22) Date of filing: 30.07.2024
(51) Int. Cl.: F25D 23/06, F25D 25/02, F25D 11/02, F16L 59/065

(54) **HEAT INSULATOR**

(30) Priority: 31.07.2023 KR 20230100006
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); LEE, Sungsub, Seoul 08592 (KR); RYU, Minsu, Seoul 08592 (KR)
(74) Representative: Ter Meer Steinmeister & Partner
(86) International application number: PCT/KR2024/011145
(87) International publication number: WO 2025/029003

(57) **Abstract**

A refrigerator is disclosed. The refrigerator includes: a main body including a first storage chamber and a second storage chamber, the main body including a first plate arranged toward the first storage chamber, a second plate arranged toward the outside of the first storage chamber, and a support forming a vacuum space between the first plate and the second plate and supporting the first plate and the second plate; a first storage chamber joint which is made of a different material from the first plate and arranged at a corner portion where at least two panels forming the first storage chamber are connected; and a component coupler which fastens the first storage chamber joint to the first plate at the corner portion. Accordingly, the second storage chamber joint can block heat leakage at a corner portion of the main body, and moreover, can also be easily fastened to the main body made of a vacuum insulation panel.

## Description

### [Technical Field]

The present disclosure relates to a heat insulator. The present disclosure relates to a refrigerator equipped with a heat insulator.

### [Background Art]

Japanese Patent Application Publication No. JP 2013-002656 A (published on January 7, 2013; hereinafter referred to as Patent Document 1) discloses a refrigerator capable of reducing the number of manufacturing processes.

The refrigerator disclosed in Patent Document 1 comprises an insulating case including a vacuum insulation panel arranged between an outer case and an inner case. The inner case comprises a protrusion protruding into the refrigerator. The protrusion is formed integrally with the inner case. The protrusion includes a shelf support portion, a guide rail installation portion, and a partition wall support portion, and may support and combine components such as shelfs, drawers, and partition walls that are coupled into the interior of the refrigerator. In Patent Document 1, there is a problem of making it difficult to form the protrusion integrally with the inner case made of a metal material.

Therefore, a separate component coupler is required to couple components such as shelfs, drawers, and partition walls inside the refrigerator. When two vacuum insulation panels are assembled at a right angle, the inner cases of each vacuum insulation panel meet at the corner portions, and the corners of the metal inner cases each act as a heat bridge, causing a problem in that cold air (heat) inside the refrigerator leaks through the corners of the inner cases. In addition, according to Patent Document 1, a sheet connecting portion is formed integrally with the inner case of the vacuum insulation panel, but in this case, the sheet connecting portion is thicker than the thickness of the inner case, making it difficult to manufacture the vacuum insulation panel in which the sheet connecting portion and the inner case are formed integrally.

Therefore, a separate insulation member is required to minimize heat leakage at the corners of the refrigerator to which the vacuum insulation panel is applied.

### [Disclosure]

### [Technical Problem]

An object of the present disclosure is to provide a refrigerator having a structure capable of solving the above-described problems.

A first object is to provide a refrigerator having a structure capable of reinforcing insulation at corner portions where a plurality of vacuum heat insulators are connected.

A second object is to provide a refrigerator having a structure capable of expanding the insulation area without affecting an internal volume of the refrigerator.

A third object is to provide a refrigerator having a structure in which a joint and an additional insulation block can be easily coupled.

A fourth object is to provide a refrigerator having a structure in which a joint and an insulation block can be uniformly brought into close contact with a second case of a vacuum heat insulator.

A fifth object is to provide a refrigerator having a structure in which a shelf-hanging plate or a drawer guide can be easily coupled to provide a component such as a shelf or drawer inside the refrigerator to which a vacuum insulation panel is applied.

A sixth object is to provide a refrigerator having a structure in which a joint and an insulation block can be uniformly brought into close contact with a second case of a vacuum heat insulator using an internal component such as a shelf-hanging plate or drawer guide.

### [Technical Solution]

The heat insulator of the present disclosure may be provided as at least one heat insulator. For example, the heat insulator of the present disclosure may provide a first wall extending in one direction, and a second wall extending in a direction different from the one direction. As another example, the heat insulator of the present disclosure may include a first heat insulator and a second heat insulator. The second heat insulator may be provided as a separate component separated from the first heat insulator. The second heat insulator may be connected to the first heat insulator by a connector. In the present disclosure, the connector may be defined as a joint. The second heat insulator may include a portion extending in the same direction as the first heat insulator. Each of the first, second, third, and fourth panels may be provided as a plurality of panels. The panel may be a heat insulator or a vacuum heat insulator. The first panel may include one of the first panels forming one of the first surfaces of the refrigerator, and the other of the first panels forming the other of the second surfaces of the refrigerator. At least one of the first, second, third, and fourth panels may provide at least a portion of a wall forming a storage chamber of the refrigerator. At least one of the first, second, third, and fourth panels may provide at least a portion of a wall forming a main body of the refrigerator.

The refrigerator of the present disclosure may include at least one panel. A plurality of panels may be connected by joints. The present disclosure may include a first panel forming a first surface (for example, a side surface) of the refrigerator. Optionally, the present disclosure may include a second panel forming a second surface (for example, a rear surface) of the refrigerator. Optionally, the present disclosure may include a third panel forming a third surface (for example, an upper surface) of the refrigerator. Optionally, the present disclosure may include a fourth panel forming a fourth surface (for example, a bottom surface) of the refrigerator. Each of the first, second, third, and fourth panels may be provided as a plurality of panels. The panel may be a heat insulator or vacuum heat insulator.

The present disclosure may include a main body having a first storage chamber, a first plate arranged toward the first storage chamber, a second plate arranged toward the outside of the first storage chamber, and a vacuum space between the first plate and the second plate. The present disclosure may include a main body including a support for supporting the first plate and the second plate. Optionally, a first storage chamber joint may be provided that is made of a different material from the first plate and/or is arranged at a corner portion where at least two panels forming the first storage chamber are connected. Optionally, a component coupler may be provided that couples the first storage chamber joint to the first plate of the corner portion. According to this configuration, the first storage chamber joint can reinforce insulation at a corner portion where a plurality of vacuum heat insulators are connected. It is possible to easily connect a joint and an additional insulation block through the component coupler.

The storage chamber may include a first storage chamber and a second storage chamber.

A fastening tabfastening tab may be provided that protrudes from one side of the first storage chamber joint. The fastening tabmay have a coupling hole. The component coupler may include a bolt plate that is connected to the first plate. The component coupler may include a bolt that protrudes from the bolt plate and passes through the coupling hole. The component coupler may include a nut that is coupled to the bolt. Accordingly, the first storage chamber joint can be easily coupled through the coupling of the bolt plate and the coupling portion.

The present disclosure may include a third panel forming a third surface of the refrigerator, a fourth panel forming a fourth surface of the refrigerator, at least two first panels forming a first surface of the refrigerator, and a second panel forming a second surface of the refrigerator. The first storage chamber may be positioned higher than the second storage chamber. The first storage chamber joint may include a first joint arranged at a corner portion where the second panel and the third panel are connected. The first storage chamber joint may include a second joint arranged at a corner portion where the second panel and the first panel are connected and/or extending from an end of the first joint. The fastening tab may be formed to protrude so as to cover a portion of the bolt plate at at least one of the first joint and the second joint. Through this configuration, the fastening tab may couple at least one of the first storage chamber joints.

The fastening tab may include a first fastening tab that is formed to protrude from one end of the first joint to cover a portion of the bolt plate. The fastening tab may include a second fastening tab that is formed to protrude from one side of the second joint to cover a portion of the bolt plate and/or is arranged spaced apart from the first coupling portion. Through this configuration, the first fastening tab and the second fastening tab may firmly couple the first storage chamber joint.

Optionally, at least one shelf may be provided that is arranged in the first storage chamber. The component coupler may include at least one side wall protruding from the first plate. The component coupler may include a connecting wall that connects the side walls and/or has a through hole so that an end of the shelf is caught in a space between the plurality of side walls. The component coupler may include a shelf fastener that is formed to protrude from one of the plurality of side walls to cover the bolt plate. Accordingly, it is possible to easily install and remove the shelf by the shelf connecting wall of the component coupler.

The first storage chamber joint may include an extension rib that protrudes from one corner of the second joint or extends from the second joint. The component coupler may include a contact part that is formed to protrude from another one of the plurality of side walls to cover the extension rib. Through this configuration, the contact part of the component coupler can be uniformly brought into close contact with the first storage chamber joint.

The first storage chamber joint may include a third joint that is arranged at a corner portion where the third panel and the first panel are connected, or coupled to the first joint and the second joint. Through this configuration, the third joint may block heat leakage at the corner where the third panel and the first panel are connected.

The component coupler may include a third plate that is coupled to the first plate so as to cover the first storage chamber joint. Through this configuration, the third plate of the component coupler can firmly couple the first storage chamber joint.

The first plate may be made of a metal material. The first storage chamber joint may be made of at least one insulating material selected from PU, ABS, and EPS. As a result, the first storage chamber joint can effectively block heat leakage at the corner portion where at least two panels are connected.

The main body may include a third panel forming a third surface of the refrigerator, a first panel forming a first surface of the refrigerator, and/or a second panel forming a second surface of the refrigerator. The first panel may be provided as a plurality of panels, and may include a partition wall extending between the at least two first panels and dividing the first storage chamber and the second storage chamber. The component coupler may be coupled to at least one of the third panel and the partition wall. The component coupler may include a contact frame coupled to the first storage chamber joint to bring the first storage chamber joint into close contact with the corner portion. Through this configuration, the contact frame can easily bring the first storage chamber joint into close contact with the main body.

The first storage chamber joint may include a first joint arranged at a corner portion where the second panel and the third panel are connected.

The first storage chamber joint may include a second joint arranged at a corner portion where the second panel and the first panel are connected. The second joint may extend from an end of the first joint. The contact frame may include a first horizontal portion that extends along a surface of the first joint or is arranged to be connected to the surface of the first joint. The contact frame may include a first vertical portion that extends along the surface of the second joint or is arranged to be connected to the surface of the second joint from both ends of the first horizontal portion. Through this configuration, the first horizontal portion and the first vertical portion of the contact frame can come into uniform contact with the first storage chamber joint.

The component coupler may include a bolt. The component coupler may include a bolt plate that is coupled to the third panel.

The component coupler may include a coupling plate arranged to cover the bolt plate or having a coupling hole through which the bolt can pass.

The component coupler may include a first contact plate extending from the coupling plate to be connected to the surface of the first joint. The component coupler may include a second contact plate that extends from the first contact plate to be connected to a surface of the first horizontal portion, and brings a portion of the contact frame into close contact with the third panel together with the first contact plate. Through this configuration, the contact plate of the component coupler may easily couple a portion of the contact frame to the third panel.

The component coupler may include a shelf-hanging plate that couples a shelf arranged in the first storage chamber. The shelf-hanging plate may be formed to protrude from the contact frame. The shelf-hanging plate may include a connecting wall that protrudes from the first vertical portion or extends along the first vertical portion and has a through hole for hooking an end of the shelf. Accordingly, it is possible to easily install and remove the shelf by the shelf-hanging plate of the component coupler.

The shelf-hanging plate may include a side wall extending from the connecting wall toward the second panel. The shelf-hanging plate may include a shelf fastener that extends from the side wall or has a coupling hole through which the bolt can pass and is coupled to the second panel. Accordingly, it is possible to easily install and remove the shelf-hanging plate by the shelf fastener of the component coupler.

The at least two panels may include an insulation block extending from the corner portion where the two panels are connected. Therefore, it is possible to expand the insulating area of the refrigerator without affecting the internal volume of the refrigerator, by the insulation block.

The insulation block may include at least one insulating material selected from PU, ABS, and EPS. The insulation block may include a block cover configured to surround the insulating material. Through this configuration, the insulation block can effectively block heat leakage between the second panel and the first panel.

The insulation block may be formed integrally with the first storage chamber joint. Accordingly, it is possible to easily install and remove the first storage chamber joint and the insulation block.

The present disclosure may include a third panel forming a third surface of the refrigerator, a second panel forming a second surface of the refrigerator, and/or a first panel forming a first surface of the refrigerator. The present disclosure may include a multi-duct arranged on the second panel, communicating with the second storage chamber, or transmitting cooling air received from the second storage chamber to the first storage chamber. The insulation block may include a first insulation block extending along the second panel to surround the multi-duct. Through this configuration, the first insulation block can effectively block heat leakage of the multi-duct.

The insulation block may include a second insulation block extending along the first panel forming the first storage chamber. The insulation block may include a drawer guide formed to protrude to guide the movement of a drawer being introduced into or withdrawn from the first storage chamber. The drawer guide may be coupled to the second insulation block. Through this configuration, the second insulation block can effectively block the heat leakage from the drawer.

The present disclosure may include a first storage chamber, a first plate arranged toward the first storage chamber, a second plate arranged toward the outside of the first storage chamber, and a vacuum space between the first plate and the second plate. A first storage chamber joint may be provided, which is disposed at a corner portion where at least two panels forming the first storage chamber are connected. An insulation block formed to extend along the panel at the first storage chamber joint may be provided. A contact frame coupled to the first storage chamber joint may be provided so as to bring the first storage chamber joint and the insulation block into close contact with the corner portion. The contact frame may include a second horizontal portion extending to be connected to the insulation block and/or a second vertical portion extending from an end of the second horizontal portion to be connected to the insulation block. Through this configuration, the contact frame can easily couple the first storage chamber joint to the insulation block. The contact frame does not require a bolt plate, so it not only blocks heat leakage through the corners, but also improves insulation performance.

### [Advantageous Effects]

According to an embodiment of the present disclosure, the following effects can be achieved.

First, the main body of the refrigerator is manufactured by assembling at least two panels made of vacuum heat insulator, and a joint made of an insulating material is arranged at the corner portion where the plurality of vacuum insulation panels are connected to reinforce the insulation of the corner portion.

Second, the bolt plate is installed on at least two panels, and the bolt is formed to protrude from the bolt plate. The fastening tab in which the coupling hole is formed is provided in the joint. The bolt passes through the coupling hole of the coupling portion, and as a nut is coupled to the bolt, the joint can be easily coupled to the main body, such as the second panel, by the bolt plate.

Third, the insulation block may be formed integrally with the joint. The insulation block can expand to the insulation area of the joint. The insulation block can be arranged to use a space which does not change the internal volume of the refrigerator.

Fourth, the insulation blocks can be coupled by the bolt plate installed in the main body. The coupling hole is formed in the insulation block. The bolt of the bolt plate passes through the coupling hole of the insulation block, and as the nut is coupled to the bolt, the insulation block can be easily coupled to the main body, such as the second panel and the first panel, by the bolt plate.

Fifth, the contact frame can be coupled to the joint or the insulation block with which the joint is formed integrally. The coupling hole is formed in the contact frame. The bolt of the bolt plate passes through the coupling hole of the insulation block and the coupling hole of the contact frame, and as the nut is coupled to the bolt, the contact frame can bring the insulation block into close contact with the surface of the main body for coupling. The extension rib may be extended along the longitudinal direction of the joint. The contact frame presses the extension rib or directly presses the joint to bring the joint into close contact with the surface of the main body for coupling.

Sixth, components arranged inside the main body, such as shelfs and drawers, can be connected to the main body by having separate component couplers. The shelf-hanging plate or drawer guide having the through hole can be easily connected to the main body by the bolt plate. The bolt of the bolt plate passes through the coupling hole of the shelf-hanging plate, and as the nut is coupled to the bolt, the shelf can be easily coupled to the main body. The bolt of the bolt plate passes through the coupling hole of the drawer guide, and as the nut is coupled to the bolt, the drawer guide can be easily coupled to the main body.

Seventh, a portion of the contact frame may be coupled to the partition wall. Another portion of the contact frame may be coupled to the fourth block portion, which is the insulation block of the fourth panel. Since the contact frame and the drawer guide are coupled by the bolt of the bolt plate, the contact frame can easily bring the drawer guide into close contact with the surface of the first panel for coupling.

Eighth, the contact frame is coupled to the insulation block formed integrally with the second storage chamber joint. This allows the contact frame to easily couple the second storage chamber joint or insulation block to the main body. Since the contact frame does not require bolt plates, it not only prevents heat leakage through the corner, but also enhances insulation performance.

### [Description of Drawings]

FIG. 1 is a perspective view illustrating an appearance of a refrigerator according to one embodiment of the present disclosure.
FIG.2 conceptual diagram illustrating a vacuum heat insulator provided in the refrigerator of FIG.1
FIG. 3 is a conceptual diagram illustrating a third plate provided on a plate of FIG. 2.
FIG. 4 is a conceptual diagram illustrating a thermal insulator provided on the plate of FIG. 3.
FIG. 5 is a conceptual diagram illustrating a refrigerator main body according to one embodiment of the present disclosure.
FIG. 6 is a conceptual diagram illustrating a bolt plate installed inside the main body of FIG. 5.
FIG. 7 is a conceptual diagram illustrating a joint coupled inside the main body of FIG. 5.
FIG.8 is a conceptual diagram illustrating the structure of a second storage chamber joint of FIG.7.
FIG. 9 is a conceptual diagram illustrating a joint connected inside the main body of FIG. 5.
FIG. 10 is a cross-sectional view taken along line XVI-XVI in FIG. 9, and is a conceptual diagram illustrating a first storage chamber joint being coupled using the bolt plate.
FIG. 11 is a cross-sectional view taken along line XVIII-XVVIII in FIG. 9, and is a conceptual diagram illustrating the second storage chamber joint being coupled using the bolt plate.
FIG. 12 is a cross-sectional view taken along line XIX-XIX in FIG. 9, and is a conceptual diagram illustrating the second panel exhaust port formed in the second storage chamber joint.
FIG. 13 is a cross-sectional view taken along line XX-XX in FIG. 9, and is a conceptual diagram illustrating a fourth panel exhaust port formed in the second storage chamber joint.
FIG. 14 is a conceptual diagram illustrating a shelf-hanging plate, an evaporator coupling plate, and a drawer guide according to the present disclosure installed on the main body.
FIG. 15 is a cross-sectional view taken along line XXII-XXII of FIG. 14.
FIG. 16 is a cross-sectional view taken along line XXIII-XXIII of FIG. 14.
FIG. 17 is a conceptual diagram illustrating a close-contact structure of the first storage chamber joint of FIG. 14.
FIG. 18 is a front view illustrating a shelf, first storage chamber drawer, and second storage chamber drawer of FIG. 14 arranged in the main body.
FIG. 19 is a conceptual diagram illustrating a joint and insulation block additionally coupled to the inside of the main body according to another embodiment of the present disclosure.
FIG. 20 is a conceptual diagram illustrating the shelf and drawer coupled to the interior of the main body of FIG. 19.
FIG. 21 is a conceptual diagram illustrating a second storage chamber drawer guide and insulating material added to a portion of the second storage chamber in FIG. 19.
FIG. 22 is a conceptual diagram illustrating the second storage chamber drawer guide in FIG. 19 being coupled by a bolt plate.
FIG. 23 is a conceptual diagram illustrating a structure in which a component coupler according to still another embodiment of the present disclosure brings a first storage chamber joint into close contact with the surface of a main body.
FIG. 24 is a conceptual diagram illustrating the structure in which the component coupler in FIG. 23 is coupled.
FIG. 25 is a conceptual diagram illustrating the structure of a bracket that couples the component coupler in FIG. 24.
FIG. 26 is a conceptual diagram illustrating the component coupler in FIG. 23.
FIG. 27 is a conceptual diagram illustrating a structure in which a component coupler according to still another embodiment of the present disclosure brings the second storage chamber joint into close contact with the surface of the main body.
FIG. 28 is a conceptual diagram illustrating the component coupler being coupled inside the second storage chamber joint in FIG. 27.
FIG. 29 is a cross-sectional view taken along XXXVI-XXXVI in FIG. 28.
FIG. 30 is an exploded view illustrating a state where a block cover and an insulating material of the insulation block in FIG. 28 are disassembled.
FIG. 31 is a perspective view illustrating the component coupler in FIG. 28.
FIG. 32 is a conceptual diagram illustrating a structure in which a component coupler according to still another embodiment of the present disclosure brings a second storage chamber joint into close contact with the surface of the main body.
FIG. 33 is a conceptual diagram illustrating the state before and after a partition wall is coupled to an insulation block of a second storage chamber of still another embodiment of the disclosure.

### [Mode for Invention]

Hereinafter, a common description describing the parts commonly defined in all embodiments of the present disclosure will be described.

Optionally, the heat insulator of the present disclosure may be provided as a single heat insulator. For example, the heat insulator may provide a first wall extending in one direction and a second wall extending in a direction different from the one direction. Optionally, the heat insulator of the present disclosure may include a first heat insulator and a second heat insulator. The second heat insulator may be provided as a separate component separated from the first heat insulator. The second heat insulator may be connected to the first heat insulator by a connector. In the present disclosure, the connector may be defined as a joint. The second heat insulator may include a portion extending in the same direction as the first heat insulator. The second heat insulator may include a portion extending in a different direction from the first heat insulator. The second heat insulator may include a portion connected to the first heat insulator, or may include a portion arranged to overlap the first heat insulator in at least one direction. The heat insulator may be a vacuum heat insulator including a vacuum space or a non-vacuum heat insulator not including a vacuum space. The heat insulator may be a combination of the vacuum heat insulator and the non-vacuum heat insulator. The vacuum space provided in the second heat insulator may include a portion extending in the same direction as the vacuum space provided in the first heat insulator. The vacuum space provided in the second heat insulator may include a portion extending in a different direction from the vacuum space provided in the first heat insulator. The vacuum space provided in the second heat insulator may include a portion arranged to overlap the vacuum space provided in the first heat insulator in at least one direction. The heat insulator may be provided in the form of a panel. In the present disclosure, a "panel" is described below as an example, but a disclosure in which the "panel" is replaced with the "heat insulator" may also be included in the present disclosure. For example, in the present disclosure, when it is described below that at least two panels of the main body form the appearance of the refrigerator, it may be understood or interpreted that at least two heat insulators of the main body form the appearance of the refrigerator.

Optionally, the refrigerator of the present disclosure may include a main body. The main body may include at least one storage chamber. The main body may include a partition wall dividing a first storage chamber and a second storage chamber. The first storage chamber joint may include a first sub chamber joint, a second sub chamber joint, and/or a third sub chamber joint. The second storage chamber joint may be provided on one side of the second storage chamber. The second storage chamber joint may include a first joint, a second joint, and/or a third joint.

The partition wall may include the vacuum heat insulator and/or the non-vacuum heat insulator. The refrigerator of the present disclosure may include a door. The refrigerator of the present disclosure may include a machine room disposed on one side of the main body. At least one of a compressor, a heat-radiating component (for example, a condenser, a heat-radiating portion of a thermoelectric module, a heat sink for heat exchange with the heat-radiating portion of a thermoelectric module, or the like), and a cooling fan may be disposed in the machine room. The refrigerator may include at least one of a first cover (for example, a side cover) forming at least a portion of a first surface (for example, a side surface), a second cover (for example, a back cover) forming at least a portion of a second surface (for example, a rear surface), a third cover (for example, an upper cover) forming at least a portion of a third surface (for example, an upper surface), a fourth cover (for example, a bottom cover) forming at least a portion of a fourth surface (for example, a bottom surface), and a fifth cover (for example, a front cover) forming at least a portion of a fifth surface (for example, a front surface) for the machine room. One or more of the first, second, third, fourth, and fifth covers may be provided as a single component or in a plurality of components. The machine room may include the heat insulator in the refrigerator of the disclosure.

The panel may include at least one of a first plate, a second plate, and a side plate. A vacuum space may be provided between the first plate and the second plate. The refrigerator of the present disclosure may include at least one panel. The present disclosure may include at least one of a first panel forming at least a portion of a first surface (for example, a side surface) of the refrigerator, a second panel forming at least a portion of a second surface (for example, a rear surface) of the refrigerator, a third panel forming at least a portion of a third surface (for example, an upper surface) of the refrigerator, a fourth panel forming at least a portion of a fourth surface (for example, a bottom surface) of the refrigerator, and a fifth panel forming at least a portion of a fifth side (for example, a front surface) of the refrigerator. At least one of the first, second, third, fourth, and fifth surfaces of the refrigerator may provide at least a portion of a wall forming the main body or may provide at least a portion of a wall forming the door. At least one of the first, second, third, fourth, and fifth panels may be provided as a single component or may be provided in a plurality of components. The joint may be provided to connect the corner of the refrigerator or to connect a first wall and a second wall forming a wall of the refrigerator to each other. The joint may be provided to connect the panel to another component (for example, another panel). The joint may be provided to connect at least two of the first, second, third, fourth, and fifth panels. At least one of the first, second, third, fourth, and fifth panels may be provided as a plurality of panels, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least another one of the first, second, third, fourth, and fifth panels. The third surface of the joint may be connected to the first surface of the joint and/or the second surface of the joint. The third surface of the joint may be connected to a corner of the first surface of the joint and/or a corner of the second surface of the joint. The third surface of the joint may be formed to be inclined to at least one of the first surface of the joint and the second surface of the joint. At least some of the first, second, third, fourth, and fifth panels may be provided as panels having a first insulation performance per unit thickness, and at least other some of the first, second, third, fourth, and fifth panels may be provided as panels having a second insulation performance per unit thickness. The first insulation performance and the second insulation performance may be different.

The heat insulator or refrigerator of the present disclosure may include a duct. The duct may include a first duct, a second duct, and/or a third duct. The first duct may supply cold air to the first storage chamber or the second storage chamber. The second duct may accommodate an evaporator. The third duct may be connected to the first duct and the second duct in communication with each other. The third duct may include a first surface, a second surface, a third surface, a fourth surface, and/or a fifth surface. The first surface of the third duct may surround the first surface of the joint. The second surface of the third duct may surround the second surface of the joint. The third surface of the third duct may surround the third surface of the joint. The third duct may include a fourth surface. The fourth surface of the third duct may extend from the first surface of the third duct or may be arranged toward the second storage chamber. The fifth surface of the third duct may extend from the second surface of the third duct or may be arranged toward the evaporator.

The heat insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (for example, a left surface), a second surface (for example, a right side), a third surface (for example, a rear side), a fourth surface (for example, a lower surface), a fifth side (for example, an upper surface), and a sixth side (for example, a front surface). Some of the first, second, third, fourth, and fifth sides of the refrigerator may be provided in the form of panels, and other parts of the first, second, third, fourth, and fifth sides of the refrigerator may be provided in the form of blocks. The block may be provided as the non-vacuum heat insulator. For example, the block may be a block cover and/or a PU foam filling inside the block cover. The block may include at least one of a first block portion (for example, a side block portion), a second block portion (for example, a rear block portion or a front block portion), and a third block portion (for example, a bottom block portion or a upper block portion). Each of the first, second, and third block portions may be provided in a plurality of block portions. At least two of the first, second, and third block portions may be connected to provide the joint. The third block portion may form one surface of the first storage chamber and/or one surface of the machine room. The third block portion may be provided as a partition wall, or may form one surface of the first storage chamber.

The heat insulator or refrigerator of the present disclosure may include an insulating reinforcement portion. The insulating reinforcement structure may include a portion connected to one side of the block, or a portion formed to protrude from the block.

The heat insulator or refrigerator of the present disclosure may include a hinge. The hinge may be arranged on one side of the heat insulator. The hinge may be arranged on the main body and/or door of the refrigerator.

The hinge may include at least one of a hinge fixing portion which is a portion that the hinge is coupled to at least one of the heat insulator, the main body of the refrigerator, and the door of the refrigerator, a hinge shaft, and a hinge connecting portion which is a portion extending to protrude from the hinge fixing portion. The hinge may include at least one of a first hinge (for example, an upper hinge) arranged on one side of a wall forming the first storage chamber, a second hinge (for example, a middle hinge) arranged on the partition wall, and a third hinge (for example, a lower hinge) of the wall forming the second storage chamber. The heat insulator or the refrigerator of the present disclosure may include at least one of a hinge reinforcing frame that reinforces the strength of the hinge, a cover to which the hinge is coupled, and a hinge reinforcing plate that is arranged or accommodated so as to be connected to the panel. The hinge reinforcing frame may include at least one of a first, a second, a third, and a fourth frame portion. At least two of the first, second, third, and fourth frame portions may extend in different directions.

The heat insulator or refrigerator of the present disclosure may include a support frame. The support frame may support one surface of the panel. The support frame may include a coupling portion. The block may be supported by the support frame in the machine room. The support frame may include a first support frame and/or a second support frame.

The heat insulator or refrigerator of the present disclosure may include an inner cover. The inner cover may be arranged between the cover of the machine room and the hinge reinforcement frame (for example, the first frame portion).

The heat insulator or refrigerator of the present disclosure may include a decoration. The decoration may be arranged on the surface of the heat insulator. The decoration may be arranged on the surface of the main body and/or door of the refrigerator. For example, the decoration may be arranged on the outer surface of the heat insulator or the outer surface of the refrigerator.

The heat insulator or refrigerator of the present disclosure may include a hot line. The hot line may be arranged on the surface of the heat insulator. The decoration may be arranged on the surface of the main body and/or door of the refrigerator. The hot line may be arranged between the decoration and the surface of the heat insulator. The hot line may be arranged between the decoration and the surface of the refrigerator and/or between the decoration and the surface of the door.

The heat insulator or refrigerator of the present disclosure may include a casing. The casing may be an outer casing or an inner casing. The outer casing may be connected to the second plate. The outer casing may be provided to cover at least a portion of the second plate. The outer casing may be provided in contact with the second plate or spaced apart from the second plate by a predetermined distance. The inner casing may be connected to the first plate. The inner casing may be provided to cover at least a portion of the first plate. The inner casing may be provided in contact with the first plate or spaced apart from the first plate by a predetermined distance.

The heat insulator or refrigerator of the present disclosure may include a drawer and/or a drawer guide. The drawer guide may include a first storage chamber drawer guide provided in a first storage chamber. The first storage chamber drawer guide may include at least one of a first plate (for example, a side plate), a second plate (for example, a bottom plate), a third plate (for example, a top plate), and a fourth plate (for example, a middle plate).

The drawer guide may be provided with a second storage chamber drawer guide provided in the second storage chamber.

The heat insulator or refrigerator of the present disclosure may include a shelf and/or a shelf support frame.

[Details Description of the Disclosure] is divided into the aforementioned [common description] and the [description based on drawings] described below. In the [Details Description of the Disclosure], each of the specific details described for carrying out the disclosure may be understood as an embodiment of the present disclosure. In the [Details Description of the Disclosure], a content that combines at least two or more of the specific details described for carrying out the disclosure may also be understood as an embodiment of the present disclosure. For example, each paragraph and each combination of paragraphs in the [common description] section or the section described based on the drawings in the [Details Description of the Disclosure] may be understood as an embodiment of the present disclosure. As another example, each sentence and each combination of sentences in the [Common description] section or the section described based on the drawings in the [Details Description of the Disclosure] may be understood as an embodiment of the present disclosure.

Hereinafter, based on each drawing, the [description based on drawing] section describing the present disclosure will be described.

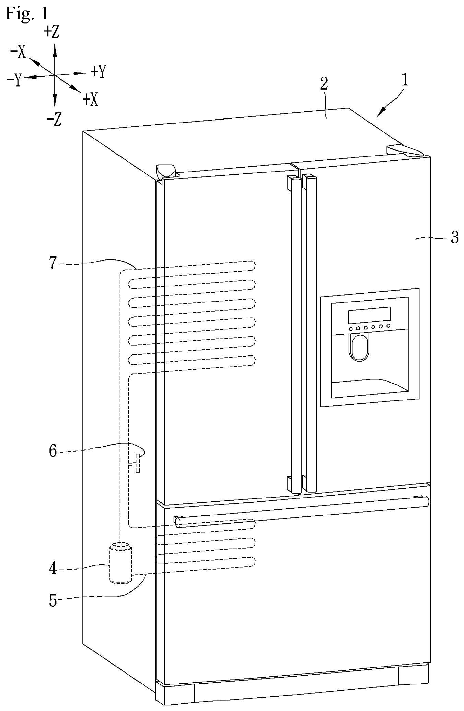

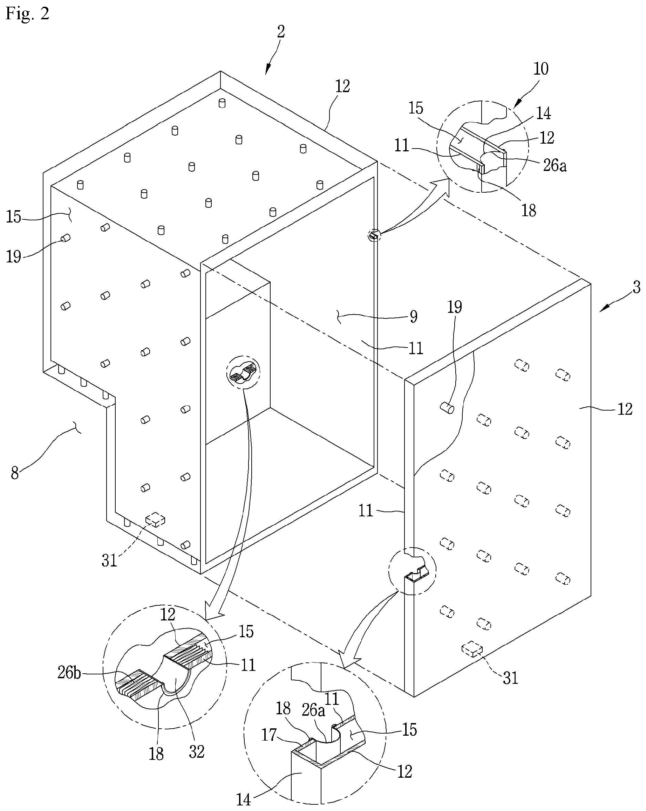

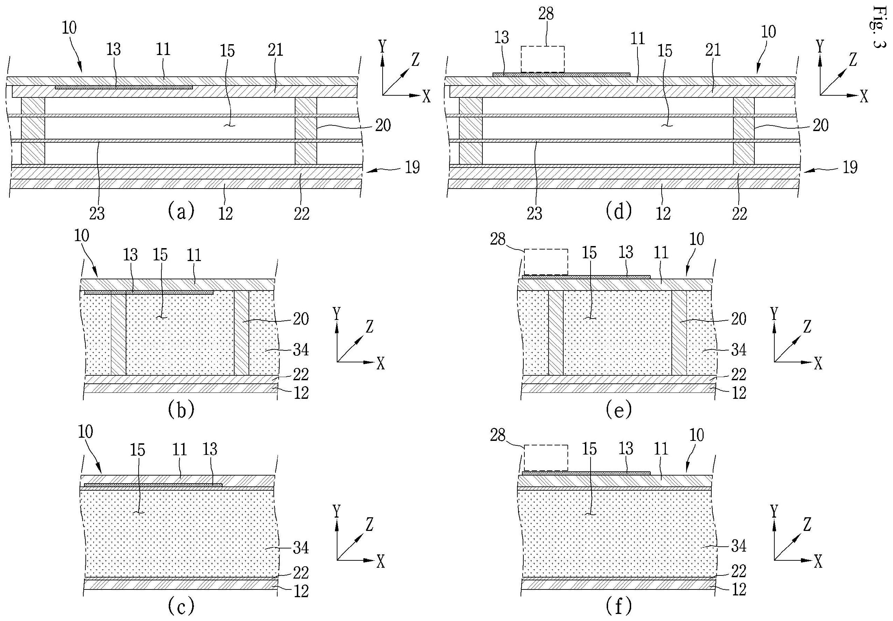

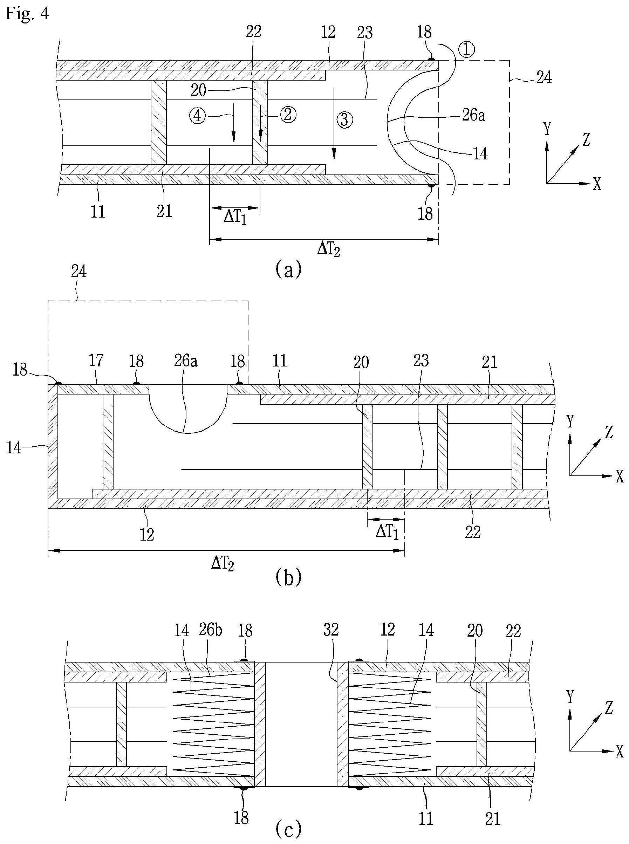

Referring to FIGS. 1 to 4, a heat insulator 10 of the present disclosure may include plates 11, 12, and 14. In the present disclosure, the term "plate" may mean at least one of the first and second plates 11 and 12 and the side plate 14. Optionally, the heat insulator of the present disclosure may include a vacuum space 15. The vacuum space 15 may be formed by walls provided by the plates 11, 12, and 14. The vacuum space 15 may have a thickness in a first direction. The plates 11, 12, and 14 may include a first plate 11 and a second plate 12. The first plate 11 may include a portion extending in a direction different from the first direction. The second plate 12 may include a portion extending in a first direction different from the second direction. Optionally, the plate may include a side plate 14 including a portion extending in the first direction. For example, the heat insulator 10 of the present disclosure may be provided such that the first and second plates 11 and 12 and the side plate 14 are each provided as separate components, and the separated components are connected to each other. As another example, the heat insulator 10 of the present disclosure may be provided such that at least two components among the first and second plates 11 and 12 and the side plate 14 are provided as an integral part, and the separated components are connected to each other. As yet another example, the heat insulator 10 of the present disclosure may be provided such that the portions connecting the first and second plates 11 and 12 and the side plate 14 to each other are each provided as an integral part. In this case, the first plate 11 may be provided as a separate component, and the separated components may be provided to be connected to each other. Alternatively, the second plates 12 may be provided as separate components, and the separated components may be provided to be connected to each other. Alternatively, the side plates 14 may be provided as separate components, and the separated components may be provided to be connected to each other. Optionally, the heat insulator 10 of the present disclosure may include a third plate that is arranged on at least a portion of the heat insulator 10 or connected to at least a portion of the plates 11, 12, and 14. The third plate may include a portion that is thinner or has the same thickness as the plates 11, 12, and 14. The third plate may include a portion that is thicker than the plates 11, 12, and 14. The third plate may be arranged in the vacuum space 15 or may be arranged outside the vacuum space 15. Examples of the third plate may include the thermal insulators 23, 26a, 26b, and 34 and the deformation resistor 13 described in the present disclosure.

Optionally, the heat insulator 10 of the present disclosure may include thermal insulators 23, 26a, 26b, and 34 for reducing the amount of heat transfer between a first space provided near the first plate 11 and a second space provided near the second plate 12, or for reducing the amount of heat transfer between the first plate 11 and the second plate 12. A thermal insulator that reduces the amount of heat transfer by conduction may be defined as a conduction resistance sheets 26a and 26b, and a thermal insulator that reduces the amount of heat transfer by radiation may be defined as a radiation resistance sheet 23. The thermal insulators 23, 26a, 26b, and 34 may be provided as a porous material 34 or as a filler 34. The filler whose interior is filled with a porous material can be defined as the porous material 34. The thermal insulators 23, 26a, 26b, and 34 may include at least one of the radiation resistance sheet 23, the porous material 34, the filler 34, and the conduction resistance sheets 26a and 26b, or a mixture of at least two of them. The thermal insulators 23, 26a, 26b, and 34 may be connected to at least a portion of the plates 11, 12, and 14 or may be provided so as not to come into contact with the plates 11, 12, and 14. A shield 24 may be provided on the outside of the thermal insulators 23, 26a, 26b, and 34 to provide insulation. A connecting frame 17 may be provided on the outside of the thermal insulators 23, 26a, 26b, and 34. The heat insulator 10 may include a conduit passing through the vacuum space 15. The conduit may be formed by providing a pipe wall 32 as a separate component, or may be provided in a form in which the pipe wall 32 is deleted and only a through hole is formed in the plate. The side plate 14 may be provided near the conduit, or the thermal insulators 23, 26a, 26b, and 34 may be provided.

Optionally, the heat insulator 10 of the present disclosure may include a deformation resistor 13 connected to at least some of the plates 11, 12, and 14 to increase the degree to deformation resistance of the plates 11, 12, and 14. When the deformation resistor is provided in the form of a plate, the deformation resistor may be referred to as a deformation resistance plate.

Optionally, the heat insulator 10 of the present disclosure may include a support 19 connected to at least some of the plates 11, 12, and 13 and maintaining the vacuum space 15. The support 19 may include a bar 20 having a portion extending in a first direction, which is a thickness direction of the vacuum space 15. The support 19 may include a support plate 22 having a portion extending in a direction different from the first direction. The support 19 may include a plurality of bars 20 and a connecting plate 21 connecting the plurality of bars 20. The support 19 may include at least one of the bar 20, the connecting plate 21, and the support plate 22, or a mixture of at least two of them.

Optionally, the heat insulator 10 of the present disclosure may include a component coupler that provides a portion where the components 24, 28, and 32 are arranged or supported. For example, when the component coupler is provided in the form of a plate, the component coupler may be referred to as a component coupler plate. The component connected to the component coupler may include a through component that is arranged to pass through at least a portion of the heat insulator 10 or at least some of the plates 11, 12, and 14. The component connected to the component coupler may include a surface component that is arranged to be connected to the surface of the heat insulator 10 or to be connected to the surfaces of the plates 11, 12, and 14. The through component may be a component that forms a path through which a fluid (electricity, refrigerant, water, air, or the like) passes. The through component may be provided in the form of a tube. The tube may include a straight tube and/or a curved tube. The tube may be provided in a plurality of tubes or may extend in one direction. The through component may include at least one of the tube, the first outlet portion, and the second outlet portion. In the present disclosure, the fluid is defined as all types of flowing objects. The fluid includes moving solids, liquids, gases, and electricity. The through component may be a component that forms a path through which a refrigerant for heat exchange passes, such as a Suction Line Heat Exchanger (SLHX) or a refrigerant pipe. The SLHX may be understood as a suction line heat exchanger that causes heat exchange between the refrigerant that has passed through the evaporator and the refrigerant before being introduced into the evaporator. The through component may be a wire that supplies electricity to the apparatus. The through component may be a component that forms a path through which air can pass, such as a duct or port through which a fluid flows along the surface of the through component. The port may include an exhaust port that provides a path through which air is exhausted from a space formed between the first plate 11 and the second plate 12 to form the vacuum space 15. The through component may be paths through which fluids such as coolant, hot water, ice, and defrost water may pass. Examples of the surface component may include a peripheral insulating material, a side panel, an injected foam, a pre-prepared resin, a hinge, a latch, a basket, a drawer, a shelf, lighting, a sensor, an evaporator 7, a front decoration, a hot line, a heater, an exterior cover, and an interior cover.

Through FIGS. 1 to 4, terms such as the plate, the first plate, the second plate, the side plate, the third plate, the vacuum space, the thermal insulator, the conduction resistance sheet, the radiation resistance sheet, the porous material, the filler, the component coupler, the joint, the support, the bar, the support plate, the connecting plate, the deformation resistor, the deformation resistance plate, the component coupler, the component coupler plate, the through component, the surface component, the duct, the port, or the like are defined. In the present disclosure, when the above terms are used in parts other than the parts described with respect to FIGS. 1 to 4, the terms used should be interpreted as defined in FIGS. 1 to 4.

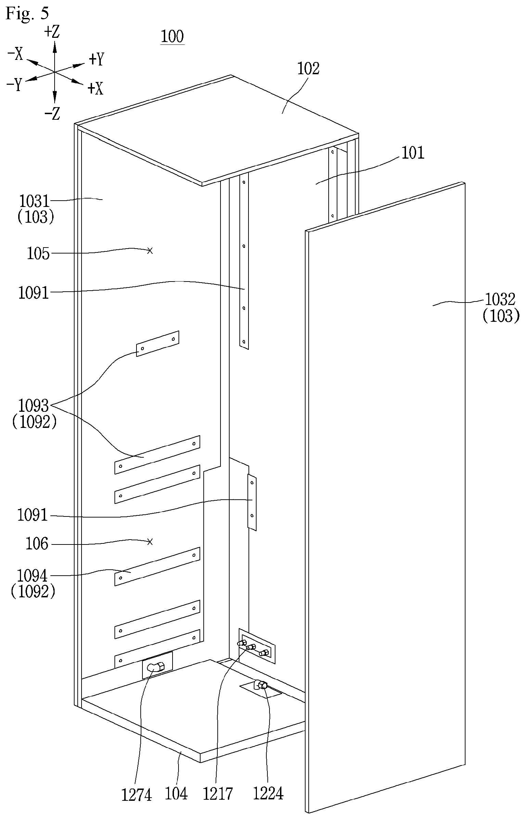

In the present disclosure, that object A is connected to object B may be defined to mean that at least a portion of the object A and at least a portion of the object B are directly connected, or that at least a portion of the object A and at least a portion of the object B are connected via an intermedium between the objects A and B. In a modification example, the object A being connected to the object B may include a case in which the object A and the object B are prepared as a single body in a shape in which they are connected in the above-described manner. In the present disclosure, examples of connection can be support, combine, and seal, which will be described later. In the present disclosure, the phrase "object A is supported by the object B" may be defined to mean that the object A is restricted from moving in one or more of +X, -X, +Y, -Y, +Z, and -Z axis directions by the object B. In the present disclosure, examples of support may be coupling and sealing, which will be described later. In the present disclosure, the phrase "object A is combined with the object B" may be defined to mean that the object A is restricted from moving in one or more of the X, Y, and Z-axis directions by the object B. In the present disclosure, an embodiment of the combination may be a sealing, which will be described later. In the present disclosure, the phrase "object A is sealed with the object B" may be defined to mean that movement of fluid is not permitted at a portion where the object A and object B are connected. In the present disclosure, at least one object, that is, at least a portion of the object A and the object B, may be defined as including a portion of the object A, the entirety of the object A, a portion of the object B, the entirety of the object B, a portion of the object A and a portion of the object B, a portion of the object A and the entirety of the object B, the entirety of the object A and a portion of the object B, and the entirety of the object A and the entirety of the object B. In the present disclosure, the phrase "plate A may be a wall defining space A" may be defined to mean that at least a portion of the plate A may be a wall forming at least a portion of the space A. That is, at least a portion of the plate A may be the wall forming the space A, or the plate A may be the wall forming at least a portion of the space A. In the present disclosure, the central portion of an object may be defined as a portion positioned at the center among three portions obtained by dividing the object into three equal parts along a longitudinal direction of the object. The periphery of an object may be defined as a portion positioned on one side or the other of a central portion among three portions obtained by dividing the object into three equal parts. The periphery of an object may include a surface in contact with the central portion and a surface opposite thereto. The opposite surface may be defined as the border or corner of the object. In the present disclosure, a degree to deformation resistance indicates the degree to which an object resists deformation, and may be defined as a value determined by the shape including the thickness of the object, the material of the object, and the processing method of the object. In the present disclosure, a degree of heat transfer resistance indicates the degree to which an object resists heat transfer, and may be defined as a value determined by the shape including the thickness of the object, the material of the object, and the processing method of the object. In the present disclosure, a degree of heat transfer resistance may be defined as at least one of a degree of conduction resistance, a degree of radiation resistance, and the degree of convection resistance or a sum of at least two or more thereof. The terms "upper side", "lower side", "right side", "left side", "front side", and "rear side" used in the following description will be understood through the coordinate system illustrated in FIGS. 1 and 5. An example of the "+Z" means the "upper side", an example of the "-Z" means the "lower side", an example of the "+Y" means the "right side", an example of the "-Y" means the "left side", an example of the "+X" means the "front side", and an example of the "-X" means the "rear side". A front-rear direction used in the present specification may be an example of the X-axis direction, a left-right direction may be an example of the Y-axis direction, and an up-down direction may be an example of the Z-axis direction.

The heat insulator 10 of the present disclosure may be applied to a refrigerator 1. The refrigerator 1 may include a main body 2 provided with a cavity 9 capable of storing stored items, and a door 3 provided to open and close the main body 2. A cold source for supplying cold air (cold) to the cavity 9 may be provided. For example, the cold source may be an evaporator 7 that evaporates a refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

FIG. 5 is a conceptual diagram illustrating a refrigerator main body 100 according to one embodiment of the present disclosure.

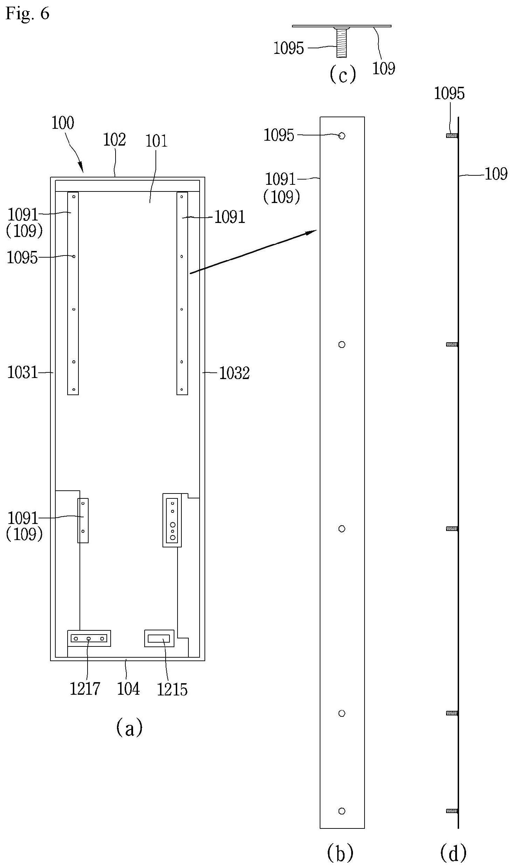

FIG. 6 is a conceptual diagram illustrating a bolt plate 109 installed inside the main body 100 of FIG. 5.

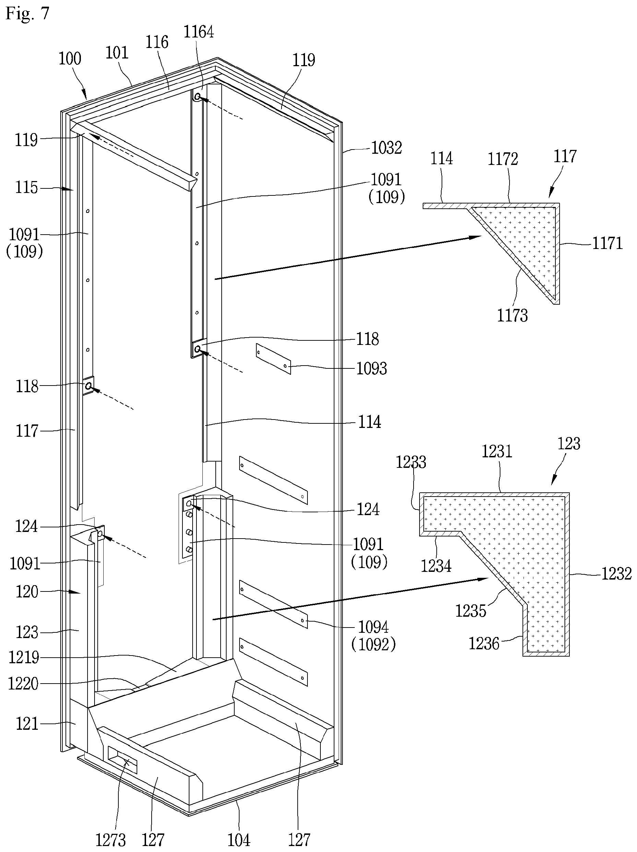

FIG. 7 is a conceptual diagram illustrating a joint 110 coupled inside the main body 100 of FIG. 5.

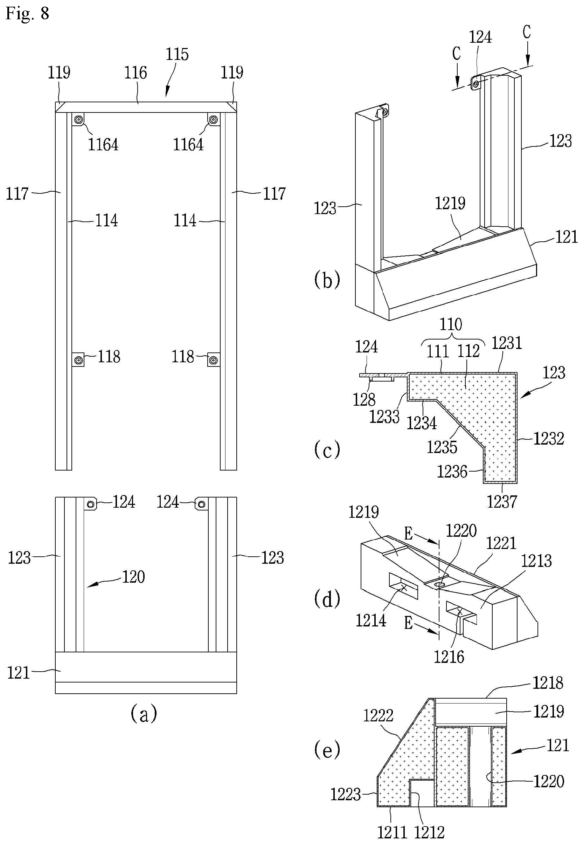

FIG. 8 is a conceptual diagram illustrating the structure of a second storage chamber joint 120 of FIG. 7.

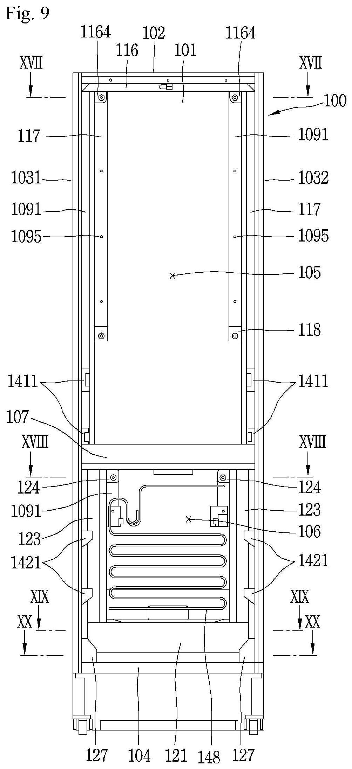

FIG. 9 is a conceptual diagram illustrating a joint 110 coupled inside the main body 100 of FIG. 5.

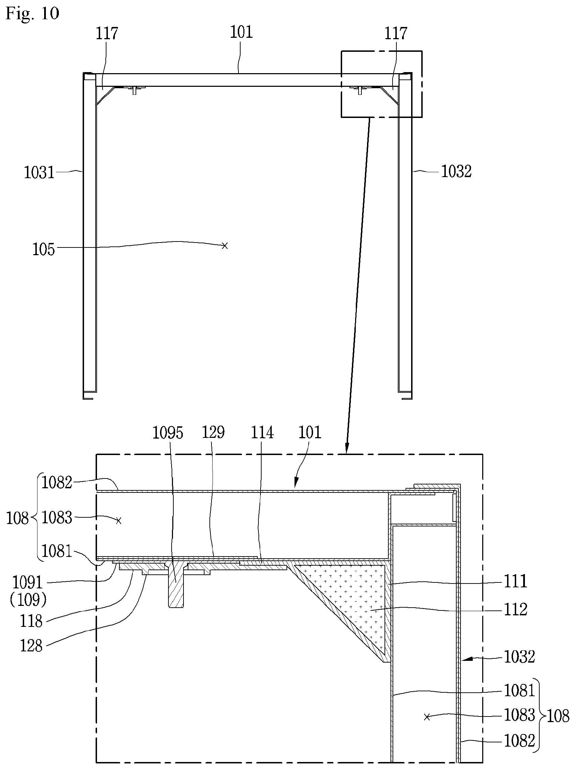

FIG. 10 is a cross-sectional view taken along line XVI-XVI of FIG. 9, and is a conceptual diagram illustrating a first storage chamber joint 115 being coupled using a bolt plate 109.

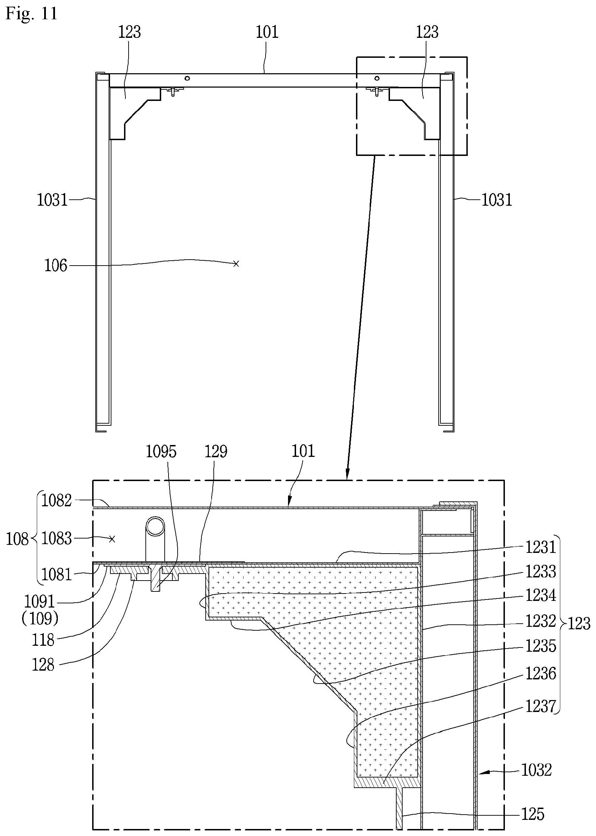

FIG. 11 is a cross-sectional view taken along line XVIII-XVVIII in FIG. 9, and is a conceptual diagram illustrating a second storage chamber joint 120 being coupled using the bolt plate 109.

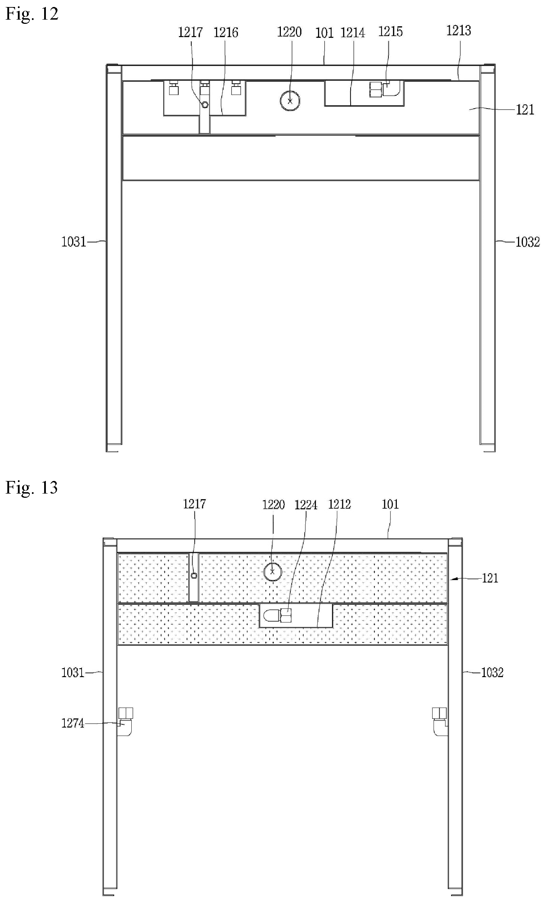

FIG.12 is cross-sectional view taken along line XIX-XIX in FIG.9, and is conceptual diagram illustrating a second panel exhaust port 1215 formed in the second storage chamber joint 120.

FIG.13 is a cross-sectional view taken along line XX-XX in FIG.9, and is a conceptual diagram illustrating a fourth panel exhaust port 1224 formed in the second storage chamber joint 120.

Referring to FIGS. 5 and 6, the refrigerator according to the present disclosure includes the main body 100 and the door (not illustrated).

The main body 100 forms the appearance of the refrigerator. The main body 100 may include at least two panels.

A machine room may be installed in a portion of the fourth panel 104.

The vacuum insulation body 108 may form a portion of at least one of the second panel 101, the third panel 102, the first panel 103, and the fourth panel 104. A storage chamber is formed inside the main body 100. The storage chamber includes a second storage chamber 106 and/or a first storage chamber 105. The second storage chamber 106 and the first storage chamber 105 may be arranged spaced apart from each other in one direction (for example, upward or downward) of the main body 100. In the present embodiment, the first storage chamber 105 and the second storage chamber 106 are illustrated as being arranged on one side (for example, an upper side) and the other side (for example, a lower side) of the main body 100, respectively. The second storage chamber 106 and the first storage chamber 105 may be partitioned by a partition wall 107. The partition wall 107 is formed to extend in one direction (for example, horizontally) from one 1031 of the first panels to the surface of the other 1032 of the first panels. The partition wall 107 may be arranged in the central portion of the main body 100.

The partition wall 107 may be positioned between 1/3 and 2/3 of the height (vertical distance) between the fourth panel 104 and the third panel 102 upward from the fourth panel 104 when the height is divided into three equal parts. In the present embodiment, the partition wall 107 is illustrated to be arranged at approximately 1/3 of the height upward from the fourth panel 104.

The partition wall 107 may be configured to include a partition wall cover made of a plastic injection molding material and an insulating material provided on the partition wall cover. The insulating material inside the partition wall 107 may be made of PU foam, or the like.

The door includes a first storage chamber 105 door and/or a second storage chamber 106 door.

At least two panels forming the main body 100 can be assembled in the following order. First, the second panel 101 and the third panel 102 may be assembled. A portion of the second panel 101 and a portion of the third panel 102 are coupled by intersecting in one direction (for example, perpendicular to each other). A portion extending from the second panel 101 may be bent and coupled to cover a portion of the third panel 102. Next, one of the first panels 1031 (or the other one 1032 of the first panels) among at least two first panels 103, the second panel 101 and the third panel 102 can be assembled. One of the first panels 1031 is extended. A component coupler is provided inside the main body 100. The component coupler is configured to couple components arranged on the main body 100. For example, the component coupler may couple the joint 110 or the like to be described later.

In the present embodiment, the component coupler may include the bolt plate 109. The component coupler may use the bolt plate 109 to couple components such as the joint 110 to the main body 100. The bolt plate 109 is formed in a plate shape.

The bolt plate 109 is installed toward the storage chamber on the second panel 101 and the first panel 103. The bolt plate 109 may be bonded to the first plate 1081 of at least one of the second panel 101 and the first panels 1031 and 1032 by an adhesive or welding.

The first plate 1081 including the vacuum heat insulator 108 is arranged toward the inside of the main body 100. The second plate 1082 including the vacuum heat insulator 108 is arranged toward the outside of the main body 100.

The bolt plate 109 is formed so that a length is relatively longer than a width thereof. The bolt plate 109 may include a first bolt plate 1091 extending in the longitudinal direction of the second panel 101. The first bolt plate 1091 is provided in a plurality of plates.

The first bolt plate 1091 is arranged spaced apart from the second panel 101. Among the spaced first bolt plates 1091, the first bolt plate 1091 positioned on one side (for example, the upper side) may be positioned in the first storage chamber 105, and/or the first bolt plate 1091 positioned on the other side (for example, the lower side) may be positioned in the second storage chamber 106.

The first bolt plate 1091 is arranged spaced apart from a portion (that is, the left and/or right end) of the second panel 101 at a predetermined distance from a portion (for example, a left and/or right end) of the second panel 101. A first distance between the first bolt plate 1091 and one end (for example, left) or the other (for example, right) end of the second panel 101 is smaller than a second distance between the first bolt plate 1091 and a longitudinal center line passing through the center of the second panel 101 in the longitudinal direction of the second panel 101.

The bolt plate 109 may include a second bolt plate 1092 extending in one direction of the first panels 1031 and 1032. A plurality of second bolt plates 1092 are provided.

The second bolt plate 1092 is arranged spaced apart from the first panels 1031 and 1032. The spacing between at least two second bolt plates 1092 may vary depending on the size and spacing of the components.

A first storage chamber drawer guide 1411 may be installed on the first panel 103 of the first storage chamber 105 based on the partition wall 107. A second storage chamber drawer guide 1421 may be installed on the first panel 103 of the second storage chamber 106.

The second bolt plate 1092 may include a bolt plate 1093 for installing the first storage chamber drawer guide and a bolt plate 1094 for installing the second storage chamber drawer guide.

Among at least two spaced second bolt plates 1092, the second bolt plate 1092 positioned on one side may be positioned in the first storage chamber 105, and/or the second bolt plate 1092 positioned on the other side may be positioned in the second storage chamber 106.

The second bolt plate 1092 may be positioned lower than the first bolt plate 1091.

However, the installation positions of the first bolt plate 1091 and the second bolt plate 1092 may be installed differently depending on the positions of the components arranged on the inner surface of the refrigerator main body 100.

The bolt plate 109 includes at least one bolt 1095.

The bolt 1095 is formed to protrude from the bolt plate 109 toward the storage chamber. Screw threads are formed in a spiral direction along the outer circumference of the bolt 1095. The diameter of the bolt 1095 is smaller than the width of the bolt plate 109.

The bolt 1095 is arranged spaced apart from the bolt plate 109 at a predetermined interval along the longitudinal direction.

Referring to FIG. 7, the joint 110 is arranged inside the main body 100. The joint 110 is provided at the corner of a panel of the main body 100 made of a vacuum heat insulator. The joint 110 is configured to connect at least two panels.

The joint 110 may be made of one or a combination of two or more selected from, for example, polyurethane (PU), acrylonitrile (ABS), butadiene, styrene, and expandable polystyrene (EPS) as an insulating material. Through this configuration, when at least two panels made of vacuum heat insulators are assembled together to form the main body 100 of the refrigerator, and the first plate 1081, which is the second case of the vacuum heat insulator, is made of a metal material, the joint 110 can minimize the leakage of cold air (heat) from the storage chamber to the outside of the main body 100 and secure insulation performance.

The joint 110 can reinforce the insulation of the corner portion where a plurality of vacuum heat insulators 108 are connected.

The joint 110 may include a joint cover 111 and a joint insulating material 112. The joint insulating material 112 is made of an insulating material such as PU. The joint cover 111 is formed to surround the joint insulating material 112. The joint cover 111 may be made of a plastic material.

In order to connect the joint 110 to the main body 100, coupling portions 1164, 118, and 124 may be provided on one side of the joint 110. The coupling portions 1164, 118, and 124 may include a coupling hole. The coupling portions 1164, 118, and 124 are connected to the component coupler through the coupling hole, thereby coupling the main body 100 and the joint 110.

The coupling portions 1164, 118, and 124 may be formed integrally with the joint 110. The coupling portions 1164, 118, and 124 may be formed to protrude from one side of the joint 110. The coupling portions 1164, 118, and 124 may extend in one direction from the joint cover 111. The coupling portions 1164, 118, and 124 may have a thickness corresponding to that of the joint cover 111.

The coupling portions 1164, 118, and 124 may be formed in a plate shape. The coupling portions 1164, 118, and 124 may be arranged in the same plane as one surface of the joint 110.

The joint 110 includes an extension rib 114. The extension rib 114 may be formed integrally with the joint 110. The extension rib 114 may extend along the longitudinal direction of the joint 110. The length of the extension rib 114 is formed to be longer than the width of the extension rib 114. The length of the extension rib 114 may be formed to be equal to or smaller than the length of the joint 110.

Some of the coupling portions 1164, 118, and 124 may be arranged to overlap a portion of the extension rib 114 so that some of the coupling portions 1164, 118, and 124 cover a portion of the extension rib 114.

Through this configuration, the coupling portions 1164, 118, and 124 may receive a pressing force from the component coupler to press and close the joint 110 and the extension rib 114 toward the surface of the main body 100, that is, the first plate 1081 of the vacuum heat insulator 108.

One side (for example, the left end or the right end) of the extension rib 114 may be arranged to be connected in one direction to one side (for example, the right end or the left end) of the bolt plate 109.

Through this configuration, the extension rib 114 may be restricted from moving in one direction by the bolt plate 109. In the coupling portion, the extension rib 114 can improve the adhesion between the surface of the main body 100 and the joint 110.

The joint 110 may be divided into a first storage chamber joint 115 provided in the first storage chamber 105 and a second storage chamber joint 120 provided in the second storage chamber 106.

Referring to FIG. 7, the first storage chamber joint 115 may include a first joint 116 arranged at a corner portion where the second panel 101 and the third panel 102 are connected.

The first joint 116 is formed to extend along one direction of the second panel 101. The first joint 116 is configured to connect the second panel 101 and the third panel 102. The first joint 116 may have a triangular cross-sectional shape.

The end (for example, both ends) of the first joint 116 may be arranged to be connected to at least one of one of the first panels 1031 and the other of the first panels 1032.

Among the three side surfaces of the first joint 116, the first surface may be connected to the surface of the third panel 102. The second surface of the first joint 116 may be connected to the surface of the second panel 101. The third surface of the first joint 116 is formed to extend in a diagonal direction so as to connect the ends of the first surface and the second surface. The third surface of the first joint 116 may be arranged toward the storage chamber.

A first fastening tab 1164 may be provided in the first joint 116. The first fastening tab 1164 is formed in a plate shape. The first fastening tab 1164 may extend to protrude from the second surface of the first joint 116. The first fastening tab 1164 has a coupling hole.

The first fastening tab 1164 is arranged to cover a portion of the first bolt plate 1091. The first fastening tab 1164 and a portion of the first bolt plate 1091 are arranged to overlap each other.

A bolt 1095 arranged on a portion of the first bolt plate 1091 may be connected to the first fastening tab 1164 by passing through the coupling hole of the first fastening tab 1164. A coupler such as a nut may be coupled to the bolt 1095, so that the first joint 116 may be coupled to the first plate 1081 of the second panel 101.

However, instead of the bolt plate 109 equipped with the bolt 1095, a nut plate equipped with a nut portion may be installed on the first plate 1081 of the second panel 101. In this case, a coupler such as a bolt may be connected to the nut portion, and the first joint 116 may be connected to the first plate 1081 of the second panel 101.

The first storage chamber joint 115 may include a second joint 117 arranged at the corner portion where the second panel 101 and the first panel 103 are connected.

The second joint 117 is formed to be extended. The second joint 117 extends longer than the length of the first bolt plate 1091. The second joint 117 is arranged at the end of the second panel 101. The second joint 117 is similar to the configuration of the first joint 116 in that the second joint has a triangular cross-sectional shape, and therefore, repeated descriptions will be omitted.

The first surface of the second joint 117 is connected to the surface of the first panel 103 and/or the second surface of the second joint 117 is connected to the surface of the second panel 101. The third surface of the second joint 117 extends diagonally to connect the first and second surfaces of the second joint 117.

The second fastening tab 118 may be formed to protrude in one direction (for example, to the left or right) from a portion (for example, the lower side) of the second joint 117. The second fastening tab 118 may be formed in a plate shape. A coupling hole is formed in the second fastening tab 118.

The second fastening tab 118 may be arranged to cover a portion of the first bolt plate 1091. The second fastening tab 118 and a portion of the first bolt plate 1091 may be arranged to overlap each other.

The bolt 1095 arranged on a portion of the first bolt plate 1091 may be connected to the second fastening tab 118 by passing through the coupling hole of the second fastening tab 118. A coupler such as a nut may be coupled to the bolt 1095, and the second joint 117 may be coupled to the first plate 1081 of the second panel 101.

A portion of the second joint 117 may be connected to the surface of the partition wall (107, refer to FIG. 9).

The extension rib 114 may be further provided on the second surface of the second joint 117. The extension rib 114 may be formed to protrude in one direction (for example, toward the left or right) at the portion where the second surface and the third surface of the second joint 117 meet. The extension rib 114 may be formed integrally with the joint cover 111 of the second joint 117.

The extension rib 114 extends along the longitudinal of the second joint 117. One end of the extension rib 114 may be connected to or overlapped with one end of the first bolt plate 1091.

The first fastening tab 1164 of the first joint 116 is arranged to cover the first bolt plate 1091 and the extension rib 114 of the second joint 117, and the coupler such as a nut is coupled to the bolt 1095, so that the coupling force of the first joint 116, the second joint 117, and the first bolt plate 1091 can be firmly maintained.

When the first fastening tab 1164 of the first joint 116 and the first bolt plate 1091 are coupled, the first fastening tab 1164 presses the extension rib 114 of the second joint 117, thereby obtaining the effect of bringing the second joint 117 into close contact with the surface of the second panel 101 and the first panel 103.

The extension rib 114 surrounds one surface of the first bolt plate 1091, thereby minimizing heat leakage through the bolt plate 109.

The first storage chamber joint 115 may include a third joint 119 arranged at the corner where the third panel 102 and the first panel 103 are connected.

The third joint 119 is formed to extend in one direction of the first panel 103. The second joint 117 is similar to the configuration of the first joint 116 in that the second joint has a triangular cross-sectional shape, and therefore, repeated descriptions will be omitted.

The first surface of the third joint 119 is connected to the surface of the first panel 103 and/or the second surface of the third joint 119 is connected to the surface of the third panel 102. The third surface of the third joint 119 extends diagonally to connect the first surface and the second surface of the third joint 119.

A portion (for example, a rear end) of the third joint 119 facing in the opposite direction from the door is connected to one end of the first joint 116 and a portion of the second joint 117. A connecting portion is further provided on a portion (for example, a rear end) of the third joint 119. The connecting portion may be formed to be inclined so as to face and be connected to the third surface of the first joint 116. The connecting portion of the third joint 119 and one end of the first joint 116 are connected to each other.

A portion (for example, an upper portion) of the second joint 117 may be connected to a portion (for example, a lower side of one end) of the first joint 116 and a portion (for example, a lower side of a rear end) of the third joint 119. The second joint 117 may support the first joint 116 and/or the third joint 119.

The first storage chamber joint 115 may be assembled in the order of the second joint 117, the first joint 116, and the third joint 119.

Referring to FIGS. 7 and 8, the second storage chamber joint 120 may include a first joint 121 arranged at a corner portion where the fourth panel 104 and the second panel 101 are connected.

The first joint 121 is formed to be extended. The first joint 121 is configured to connect the fourth panel 104 and the second panel 101. Both ends of the first joint 121 may be connected to the first panels 1031 and 1032.

The first joint 121 may have a rectangular or pentagonal cross-sectional shape. In the present embodiment, the first joint 121 has a pentagonal cross-sectional shape. Among the five side surfaces of the first joint 121, the first surface 1211 may be formed to be connected to the fourth panel 104. The first surface 1211 of the first joint 121 may form the surface of the first joint 121.

An accommodating groove 1212 (see FIG. 13) may be formed on the surface of the first joint 121. The accommodating groove 1212 is a fourth panel exhaust port accommodating groove for accommodating the fourth panel exhaust port 1224. The accommodating groove 1212 may be formed to be open.

The fourth panel exhaust port 1224 is accommodated in the accommodating groove 1212. Through this configuration, the first joint 121 surrounds the fourth panel exhaust port 1224, thereby blocking the connection of cold air between the fourth panel exhaust port 1224 and the second storage chamber 106, thereby improving insulation performance.

The second surface 1212 of the first joint 121 can be formed to be connected to the second panel 101. The second surface 1212 of the first joint 121 may form the surface of the first joint 121.

A plurality of holes 1214 and 1216 may be formed to be recessed in the second surface 1212 of the first joint 121. Among the plurality of holes 1214 and 1216, a first hole 1214 is an exhaust port accommodating hole formed to exhaust air in order to form a vacuum heat insulator 108 of the second panel 101.

The second panel exhaust port 1215 is accommodated in the first hole 1214. Through this configuration, the first joint 121 surrounds the second panel exhaust port 1215, thereby blocking the connection between the second panel exhaust port 1215 and the cold air of the second storage chamber 106, thereby improving the insulation performance.

Among the plurality of holes 1214 and 1216, a second hole 1216 may be a hole for forming a suction line heat exchanger (hereinafter, SLHX) outlet portion. The suction pipe is a refrigerant pipe connected between the evaporator 148 and the compressor, and sucks the refrigerant that has passed through the evaporator 148 into the compressor. The SLHX is configured by welding a capillary tube to the outer peripheral surface of the suction pipe through soldering or the like. Through this configuration, the SLHX enables heat exchange by bringing the capillary tube and the suction pipe into surface contact with each other on a suction side of the compressor.

The suction line heat exchanger outlet portion 1217 is accommodated in the second hole 1216. Through this configuration, the first joint 121 surrounds the suction line heat exchanger outlet portion 1217, thereby blocking the connection between the suction line heat exchanger outlet portion 1217 and the cold air of the second storage chamber 106, thereby improving the insulation performance.

A plurality of holes 1214 and 1216 may be arranged spaced apart from each other in one direction. The first and/or second holes 1214 and 1216 may be formed to be open toward the surface of the second panel 101. A suction pipe coupling hole may be further formed to pass through the second hole 1216.

The third surface 1218 of the first joint 121 may form the surface of the first joint 121. A supporting surface may be formed on a portion (for example, the left and right ends) of the third surface 1218 of the first joint 121. The supporting surface is formed in a flat shape. The supporting surface is configured to support the second joint 123 described later.

A recessed portion 1219 may be formed to be recessed in the third surface 1218 of the first joint 121. A through portion 1220 may be formed to pass through the center portion of the recessed portion 1219. A portion (for example, at least one of the left side surface and right side surface) of the recessed portion 1219 is formed to be inclined in one direction (for example, downward) from the supporting surface toward the through portion 1220.

The defrost water generated in the evaporator 148 can be drained through the through portion 1220. An overflow prevention plate 1221 is provided in a portion (for example, a front end) of the recessed portion 1219. The overflow prevention plate 1221 is formed to block one surface of the recessed portion 1219. Through this configuration, the overflow prevention plate 1221 can prevent the defrost water accumulated in the recessed portion 1219 from overflowing onto the surface of the first joint 121.

The fourth surface 1222 of the first joint 121 may form a portion of the surface of the first joint 121. The fourth surface 1222 of the first joint 121 may be formed to be inclined downward from the third surface 1218. The fourth surface 1222 of the first joint 121 not only increases the internal volume of the refrigerator, but also enables smooth convection of cold air in the second storage chamber 106.

The fifth surface 1223 of the first joint 121 may form another portion of the surface of the first joint 121. The fifth surface 1223 of the first joint 121 may extend in one direction (for example, vertically) from the fourth surface 1222. The fifth surface 1223 of the first joint 121 may provide one side surface for connection to an additional heat insulator.

Referring to FIG. 8, the second storage chamber joint 120 may include the second joint 123 arranged at the corner portion where the first panel 103 and the second panel 101 are connected.

The second joint 123 may be arranged at the end of the second panel 101. The second joint 123 may be formed to be extended. The second joint 123 may have a polygonal cross-sectional shape. In the present embodiment, the second joint 123 is illustrated to have a heptagonal cross-sectional shape.

Among the seven side surfaces of the second joint 123, a first surface 1231 forms the surface of the second joint 123. The first surface 1231 of the second joint 123 can be formed to face and be connected to the surface of the second panel 101.

The second surface 1232 of the second joint 123 may form a portion (for example, the left surface or the right surface) of the second joint 123. The second surface 1232 of the second joint 123 may be formed to face and be connected to a surface of one of the first panels 1031 or the other of the first panels 1032.

A third surface 1233 of the second joint 123 extends from the first surface 1231. The third surface 1233 is arranged to face the second surface 1232 in one direction. The extension length of the third surface 1233 is smaller than the extension length of the first surface 1231 or the second surface 1232. The third surface 1233 of the second joint 123 is in contact with one side of the space that accommodates the evaporator 148, thereby preventing leakage of cold air (heat) generated from the evaporator 148.

A fourth surface 1234 of the second joint 123 extends from the third surface 1233 toward the second surface 1232. The fourth surface 1234 is arranged to face the first surface 1231 in one direction. The extension length of the fourth surface 1234 is shorter than the extension length of the first surface 1231 or the second surface 1232.

One surface of a return duct may be arranged to be connected to the fourth surface 1234. The return duct forms a path for cold air to be returned from the first storage chamber 105 to the second storage chamber 106.

A fifth surface 1235 of the second joint 123 extends to be inclined from one end of the fourth surface 1234 to one end of a sixth surface 1236, which will be described later, with respect to the fourth surface 1234. The other surface of the return duct may be arranged to be connected to the fifth surface 1235.

A sixth surface 1236 of the second joint 123 extends from the other end of the fifth surface 1235. The sixth surface 1236 is arranged to face the second surface 1232. The extension length of the sixth surface 1236 is smaller than the extension length of the first surface 1231 or the second surface 1232. Another surface of the return duct may be arranged to be connected to the sixth surface 1236.

A seventh surface 1237 of the second joint 123 extends from the second surface 1232. The seventh surface 1237 is arranged to face the first surface 1231 in one direction. The seventh surface 1237 is arranged to be connectable to one surface of an additional heat insulator.

A portion of the second joint 123 may be connected so as to be connectable to the surface of the partition wall 107.

A third fastening tab 124 may be provided in the second joint 123. The third fastening tab 124 may be formed to protrude in one direction (for example, the left or right direction) from the first surface 1231 of the second joint 123. The third fastening tab 124 is formed in a plate shape. A coupling hole is formed in the third fastening tab 124. The third fastening tab 124 may be connected by a bolt 1095 protruding from a portion of the first bolt plate 1091 positioned on one side (for example, lower side). The bolt 1095 passes through the coupling hole of the coupling portion, and a nut is connected to the through bolt 1095, so that the second joint 123 may be coupled to the first plate 1081, which is a surface of the second panel 101.

The second storage chamber joint 120 may include a third joint 127 arranged at the corner where the fourth panel 104 and the first panel 103 are connected.

The third joint 127 may be formed to extend in one direction from a portion (for example, a front end) of the first joint 121. The third joint 127 may have a polygonal cross-sectional shape.

In the present embodiment, the third joint 127 is illustrated as having a pentagonal cross-section. For example, the third joint 127 may include at least one of the first to fifth surfaces.

The first surface is formed to be connected to the fourth panel 104. The second surface is formed to be connected to the first panel 103. The third surface extends in one direction from the first surface and/or is arranged to face the second surface. The height of the third surface may be smaller than the height of the second surface.

The fourth surface is formed to be inclined from the third surface toward the first panel 103. The fifth surface is formed to extend from the fourth surface toward the first panel 103. The fifth surface is arranged to face the first surface. The length in one direction (for example, a left-right width) of the fifth surface may be smaller than the length in one direction (for example, a left-right width) of the first surface.

A first panel exhaust port 1274 may be formed on the surface of the first panel 103. A first panel exhaust port accommodating groove 1273 may be formed on the second surface of the third joint 127 of the second storage chamber joint 120. Through this configuration, the third joint 127 surrounds the first panel exhaust port 1274, thereby blocking the connection of the cold air between the first panel exhaust port 1274 and the second storage chamber 106, thereby improving insulation performance.

The second storage chamber joint 120 may be assembled in the order of the first joint 121 to the third joint 127. However, the order is not limited to this order.

A coupling protrusion 128 may be formed to protrude from the coupling portions 1164, 118, and 124. The coupling protrusion 128 may be formed to protrude in a circular shape so as to surround the coupling hole. The inner wall of the coupling protrusion 128 may be formed in a polygonal shape such as a hexagon. Accordingly, when a coupler such as a nut is coupled to the bolt 1095 after the bolt 1095 passes through the coupling hole, the inner wall of the coupling protrusion 128 surrounds the outer wall of the nut and engages, thereby preventing the nut from loosening.

The coupling protrusion 128 may reinforce the rigidity of the fastening tab when the plate thickness of the fastening tab is thin.

A spaced gap may be formed between the outer wall of the coupling protrusion 128 and the third surface of the second joint 123. The reason for providing the spaced gap between the outer wall of the coupling protrusion 128 and the third surface of the second joint 123 is to provide a tool insertion space for tightening the nut.

The coupling protrusion 128 may be applied not only to the first and second joints 121 and 123 of the second storage chamber joint 120, but may also be applied in the same or similar manner to the first storage chamber joint 115.

Third plates 143 and 129 may be attached to the first plate 1081. The third plates 143 and 129 may reinforce the rigidity of the first plate 1081.

The third plate 129 may be arranged to overlap the bolt plate 109. Accordingly, it is possible to reinforce the rigidity of the vacuum heat insulator 108 when the bolt plate 109 is coupled.

Since other components are the same or similar to those of the embodiments of FIGS. 1 to 13 described above, repeated descriptions will be omitted.

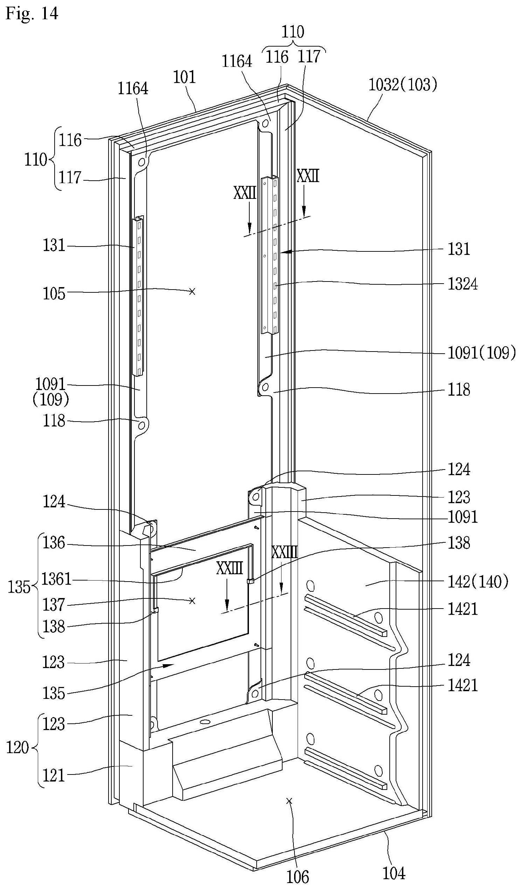

FIG. 14 is a conceptual diagram illustrating a plate for hanging a shelf 130, an evaporator coupling plate, and a drawer guide according to the present disclosure installed in the main body 100.

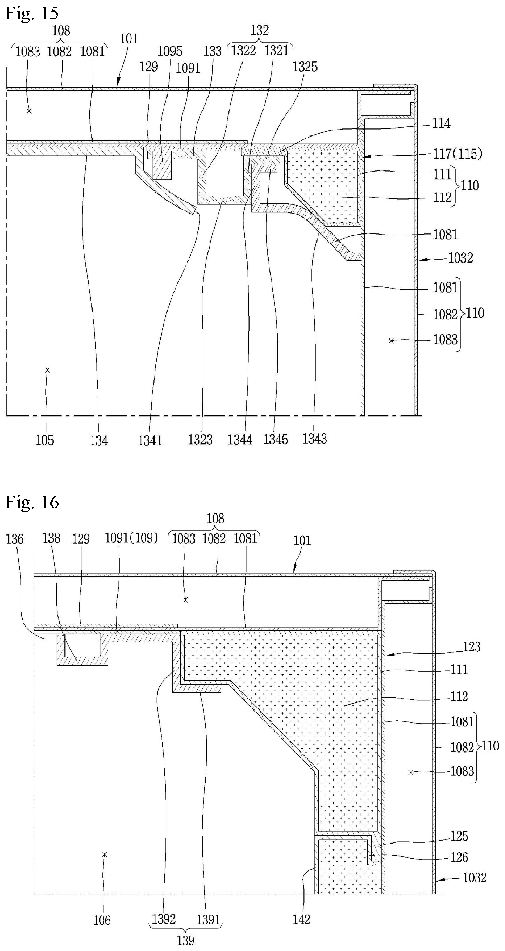

FIG. 15 is a cross-sectional view taken along line XXII-XXII of FIG. 14.

FIG. 16 is a cross-sectional view taken along line XXIII-XXIII of FIG. 14.

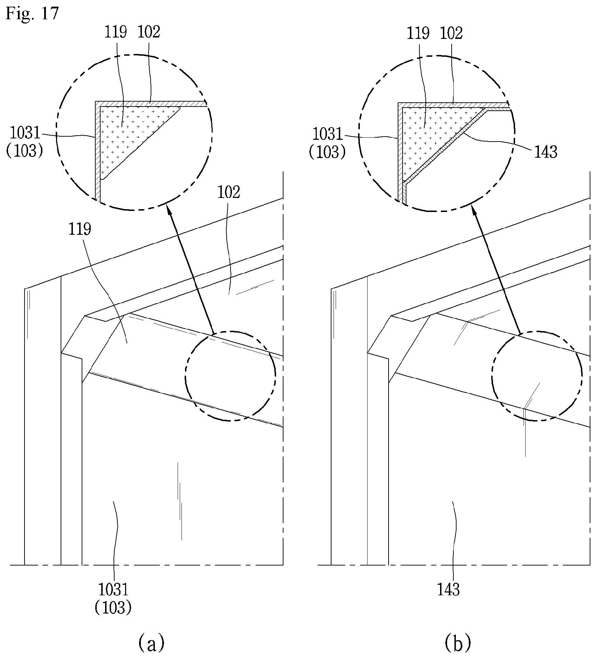

FIG. 17 is a conceptual diagram illustrating the close-contact structure of the first storage chamber joint 115 of FIG. 14.

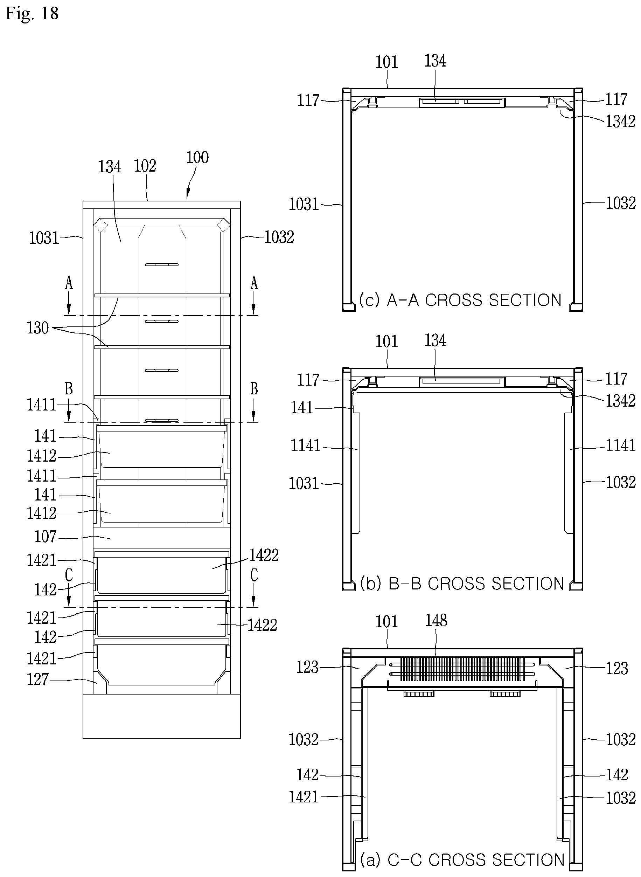

FIG. 18 is a front view illustrating the shelf 130, the first storage chamber drawer 1412, and the second storage chamber drawer 1422 of FIG. 14 arranged on the main body 100.

At least one shelf 130 may be arranged inside the main body 100.

The component coupler includes a first component coupler 131. The first component coupler 131 is configured to couple the shelf 130 to the interior of the main body 100. The first component coupler 131 may be referred to as a shelf-hanging plate.

The first component coupler 131 may be coupled to the corner of the main body 100. The first component coupler 131 may be coupled to the corner where the second panel 101 and the first panel 103 are connected. The first component coupler 131 may be arranged adjacent to the second joint 117 of the first storage chamber joint 115.

The first component coupler 131 may be extended from the second panel 101. The length of the first component coupler 131 may be formed to be smaller than the length of the second joint 117 of the first storage chamber joint 115.

The position and length of the first component coupler 131 may vary depending on the coupling position of the shelf 130.

The first component coupler 131 includes a first part 132 and a second part 133.

The first part 132 is a part where a part of the shelf 130 is caught. The first part 132 may be formed to protrude from the second panel 101 so that a part of the shelf 130 is caught. The first part 132 has a through hole 1324.

In order to couple the shelf 130 to the corresponding component, the coupling protrusion may be formed on a portion (for example, a rear end) of the shelf.

The first part 132 includes side walls 1321 and 1322 and a connecting wall 1323. The side walls 1321 and 1322 are formed to protrude in one direction from the second panel 101. The protruding lengths of the plurality of side walls 1321 and 1322 may be different from each other.

A plurality of side walls 1321 and 1322 are arranged to face each other and spaced apart from each other in one direction. An insertion space is formed between the plurality of side walls 1321 and 1322.

The connecting wall 1323 is configured to connect the plurality of side walls 1321 and 1322. The connecting wall 1323 is extended. A portion (for example, a left end) of the connecting wall 1323 may be connected to a portion (for example, a front end) of one of the plurality of side walls 1321 and 1322. A right end of the connecting wall 1323 is connected to a portion (for example, a front end) of the other of the plurality of side walls 1321 and 1322.

The plurality of side walls 1321 and 1322 and connecting wall 1323 are each extended.

The through hole 1324 is formed to pass through the connecting wall 1323 in one direction. At least two through holes 1324 may be arranged spaced apart from each other in the connecting wall 1323.

The coupling protrusion of the shelf 130 may be inserted and coupled into the insertion space between the side walls 1321 and 1322 through the through hole 1324. Through this configuration, the shelf 130 may be supported by and coupled to the connecting wall 1323.

The second part 133 is configured to couple the first component coupler 131 to the main body 100. The second part 133 may be formed in a plate shape. The second part 133 may be extended.

A coupling hole may be formed in the second part 133 to pass through in one direction. The coupling holes are arranged spaced apart from each other.

The bolt 1095 of the bolt plate 109 passes through the coupling hole, and as the nut is coupled to the bolt 1095, the first component coupler 131 may be coupled to the second panel 101 by the coupling of the second part 133 and the bolt plate 109.

Among the plurality of side walls 1321 and 1322 of the first component coupler 131, one first surface wall 1321 may be formed to have a shorter protrusion length than the second side wall 1322 of the other of the plurality of side walls 1321 and 1322. A portion (for example, a rear end) of the second side wall 1322 may be connected to the second part 133.

The contact part 1325 may extend in one direction (for example, the left and/or right direction) toward the second joint 117 from a portion (for example, a rear end) of the first side wall 1321.

The contact part 1325 may extend along a portion (for example, the rear end) of the first surface wall 1321. The contact part 1325 may be arranged to overlap the extension rib 114 so as to cover the extension rib 114 of the second joint 117.

When the first component coupler 131 is coupled, the contact part 1325 may receive a pressure in the one direction (for example, rearward) from the second part 133 and the first part 132 to bring the second joint 117 into close contact with the surface of the second panel 101.

A multi-duct 134 may be provided in the main body 100. The multi-duct 134 may be arranged in the first storage chamber 105. The multi-duct 134 forms a cold air flow path therein. The multi-duct 134 may be connected to communicate with the second storage chamber 106. The evaporator 148 may be installed in the second panel 101 of the second storage chamber 106.

Through this configuration, the multi-duct 134 may move the cold air of the second storage chamber 106 cooled by the evaporator 148 to the first storage chamber 105.

A shelf-hanging through portion 1341 may be formed in a portion (for example, left and right ends) of the multi-duct 134. The shelf-hanging through portion 1341 is formed to pass through in one direction so as to communicate with the through hole 1324. The shelf-hanging through portion 1341 is formed to be inclined in the second panel 101 so as to cover the bolt 1095 of the bolt plate 109.

A joint cover 1342 may be provided on a portion (for example, left and right ends) of the multi-duct 134. The joint cover 1342 is configured to cover the second joint 117. The joint cover 1342 may be coupled so that the multi-duct 134 is fitting-coupled between the surface of one 1031 of the first panel and the surface of the other 1032 of the first panel.

The joint cover 1342 of the multi-duct 134 may include an inclined portion 1343. The inclined portion 1343 of the multi-duct 134 is formed to be inclined at an angle corresponding to the third surface of the second joint 117, is connected to the third surface of the second joint 117, and may pressurize the third surface of the second joint 117.

The multi-duct 134 may include an insertion portion 1344 and a pressurization portion 1345.

The insertion portion 1344 may extend in one direction (for example, toward the rear) from one end of the joint cover 1342 so as to overlap the first surface wall 1321 of the first component coupler 131 in one direction. The pressurization portion 1345 may extend in one direction (for example, toward the left or right) from a portion (for example, the rear end) of the insertion portion 1344 so as to overlap the contact part 1325.

When the multi-duct 134 is fitting-coupled into the main body 100, the pressurizing portion 1345 receives the pressurizing force transmitted from the joint cover 1342 and the insertion portion 1344 and presses the contact part 1325, thereby bringing the second joint 117 into close contact with the surface of the second panel 101 together with the contact part 1325.

The component coupler includes a second component coupler 135. The second component coupler 135 may be configured to couple the evaporator 148 to the corresponding part. The second component coupler 135 may be referred to as an evaporator coupling plate.

The second component coupler 135 includes a support portion 136, an opening portion 137 and/or a hanging portion 138.

The support portion 136 may be coupled to the second panel 101 by a first bolt plate 1091. The support portion 136 may be formed in the shape of a square plate. A bolt hole may be formed at each corner portion of the support portion 136. The bolt hole may be formed to pass through the support portion 136 in one direction.

The bolt 1095 of the first bolt plate 1091 may pass through the bolt hole. A nut may be coupled to the bolt 1095 that passes through the bolt hole. Through this configuration, the second component coupler 135 may be coupled to the second panel 101 by the first bolt plate 1091.

An opening portion 137 may be formed in the support portion 136. The opening portion 137 may be formed to pass through in one direction of the support portion 136. A curling portion 1361 may be formed on the corner and corner of the support portion 136.

The hanging portion 138 may be formed in a rectangular ring shape. A hollow portion may be formed in the hanging portion 138 so that a portion of the evaporator 148 may be hooked to the hanging portion 138. A coupling protrusion may be formed in a portion of the evaporator 148. The coupling protrusion of the evaporator 148 may be inserted into the hollow portion of the hanging portion 138 and coupled by hooking.

The second component coupler 135 may include the contact part 1325.

The contact part 1325 may be formed to correspond to at least one surface of the joint 110. The contact part 1325 may be coupled to the joint 110. The contact part 1325 is configured to bring the joint 110 into contact with a surface of the main body 100. The contact part 1325 may include at least one of a first direction movement restriction portion 1391, a second direction movement restriction portion 1392, and a third direction movement restriction portion. At least one of the first direction movement restriction portion 1391, the second direction movement restriction portion 1392, and the third direction movement restriction portion may be coupled to the main body 100.

The first direction movement restrictor 1391 may extend from the joint 110 to restrict the joint 110 from moving in one direction.

The second direction movement restrictor 1392 may extend in one direction of the joint 110 to restrict the joint 110 from moving in one direction.

The third direction movement restrictor can extend in one direction of the joint 110 to restrict movement of the joint 110.

In the present embodiment, the contact part 1325 is configured to be in close contact with the second joint 117 of the second storage chamber joint 120. The contact part 1325 includes the first direction movement restriction portion 1391 and the second direction movement restriction portion 1392.

The second direction movement restrictor 1392 may extend from a portion (for example, the left or right corner) of the support portion 136. The second direction movement restrictor 1392 may be arranged to overlap the third surface of the second joint 117 in one direction. Through this configuration, the second direction movement restrictor 1392 may restrict the second joint 117 from moving in one direction.

The first direction movement restriction portion 1391 may extend from a portion (for example, a front end) of the second direction movement restriction portion 1392 toward the second joint 117. The first direction movement restriction portion 1391 may be arranged to overlap the fourth surface of the second joint 117. Through this configuration, the first direction movement restriction portion 1391 may restrict the second joint 117 from moving in one direction.

When the second part joint 135 is coupled to the main body 100 by the bolt plate 109, the contact part 1325 may bring the second joint 117 into close contact with the surface of the main body 100, thereby restricting the movement of the joint 110.

The component coupler may include a drawer guide plate 140.

The drawer guide plate 140 may include a first drawer guide plate 141 arranged in the first storage chamber 105 and a second drawer guide plate 142 arranged in the second storage chamber 106.

The drawer guides 1411 and 1421 can be formed in the drawer guide plate 140.

The drawer guide plate 140 may extend along the surface of the first panel 103 from the second joint 117.

The drawer guides 1411 and 1421 may include a first drawer guide formed to extend in one direction on the first drawer guide plate 141 and a second drawer guide 1421 formed in one direction on the second drawer guide plate 142.

The drawer guide plate 140 may be installed on the first panel 103 by the second bolt plate 1092. A coupling hole may be formed to pass through the drawer guide plate 140.

The bolt 1095 of the second bolt plate 1092 passes through the coupling hole, and a nut is coupled to the bolt 1095, so that the drawer guide plate 140 may be coupled to the first panel 103.

The second drawer guide plate 142 may be filled with an insulating material such as PU.

The second joint 123 of the second storage chamber joint 120 may include an extension rib 125 extending from the corner portion where the seventh surface and the second surface are connected.

A rib accommodating groove 126 may be formed in a portion (for example, the rear end) of the second drawer guide plate 142. The extension rib 125 of the second joint 123 may be inserted and connected into the rib accommodating groove 126.

An insulation block, which will be described later, may be arranged between the second drawer guide plate 142 and the first plate 1081 of the vacuum heat insulator 108.

The third plate 143 may be provided in the first storage chamber 105. The third plate 143 may be arranged in the first storage chamber 105 to cover the first storage chamber joint 115. The third plate 143 may be arranged inside the first storage chamber 105 and/or outside the vacuum space 1083.

In the present embodiment, the third plate 143 is illustrated as being arranged to cover the third joint 127 which is arranged at the corner of the first storage chamber joint 115 where the third panel 102 and the first panel 103 are connected.

Through this configuration, the third plate 143 can bring the joint 110 into close contact with the main body 100 without the joint 110 being exposed to the outside.

Referring to FIG. 18, a shelf 130 may be coupled to a first storage chamber 105. The shelf 130 has a bracket, and a coupling protrusion is formed on a portion of the bracket (for example, a rear end). The coupling protrusion of the bracket is inserted through a through hole 1324 of the first component coupler 131 and is hooked to the first component coupler 131, thereby allowing the shelf 130 to be coupled to and supported by the first storage chamber 105.

The first drawer guide 1411 may extend in one direction of the first panel 103. A coupling hole can be formed in the first drawer guide 1411.

The first drawer guide 1411 may be installed on the first panels 1031 and 1032 by the second bolt plate 1092. The bolt 1095 of the second bolt plate 1092 may be coupled to the first drawer guide 1411 by passing through the coupling hole of the first drawer guide 1411.

The first storage chamber drawer 1412 may be installed so that the first storage chamber drawer can be inserted or pulled out into the first storage chamber 105 along the first drawer guide 1411.

A second drawer guide 1421 may be installed on the surfaces of the first panels 1031 and 1032. The second drawer guide 1421 may extend in one direction of the first panel 103. A coupling hole may be formed in the second drawer guide 1421.

The second drawer guide 1421 may be installed on the other of the first panels 1031 and 1032 by the second bolt plate 1092. The bolt 1095 of the second bolt plate 1092 may pass through the coupling hole of the second drawer guide 1421 and be coupled to the second drawer guide 1421.

By using a component arranged inside the main body 100, the exposure of the joint 110 can be prevented and the close contact between the joint 110 and the panel can be maintained.

For example, when the shelf 130 is coupled to the interior of the main body 100, the second joint 117 of the first storage chamber joint 115 may remain in close contact with the second panel 101 and/or the first panel 103.

When the drawers 1412 and 1422 are coupled to the interior of the main body 100, the second joint 123 of the first storage chamber joint 115 and the second storage chamber joint 120 may be maintained in close contact with the second panel 101 and/or the first panel 103.

Since other components are the same or similar to those of the embodiments of FIGS. 1 to 18 described above, repeated descriptions will be omitted.

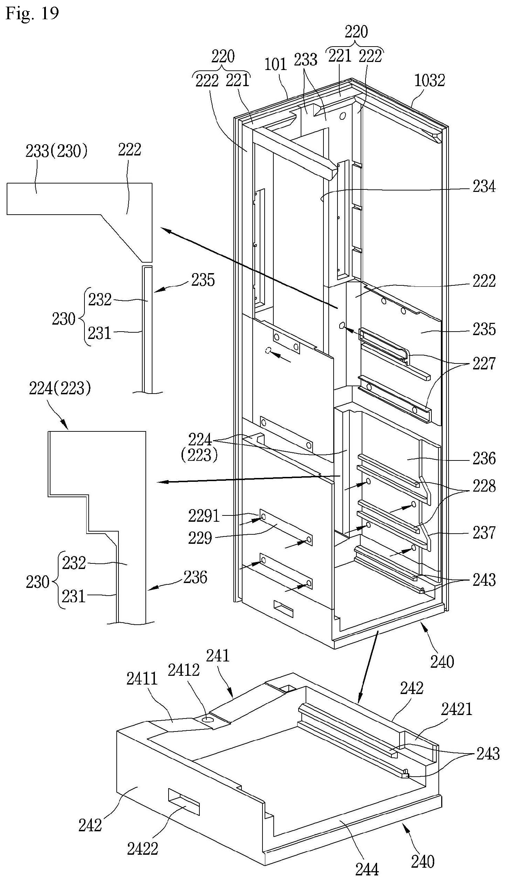

FIG. 19 is a conceptual diagram illustrating joints 220 and 223 and an insulation block 230 additionally coupled to the inside of the main body 100 according to another embodiment of the present disclosure.

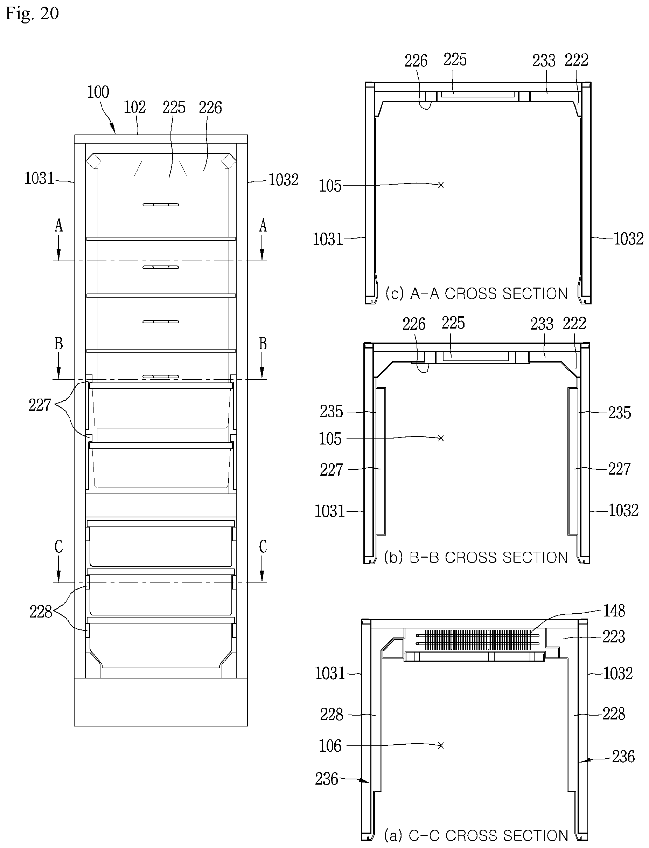

FIG. 20 is a conceptual diagram illustrating the shelf 130 and the drawer coupled to the interior of the main body 100 in FIG. 19.

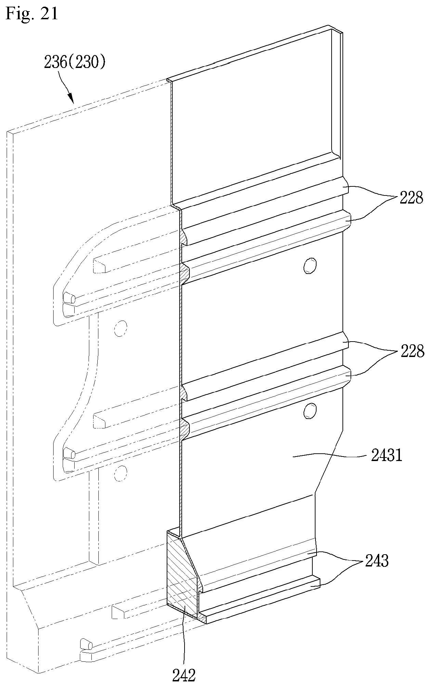

FIG. 21 is a conceptual diagram illustrating the second storage chamber drawer guide 228 and the insulating material 232 added to a portion of the second storage chamber 106 in FIG. 19.

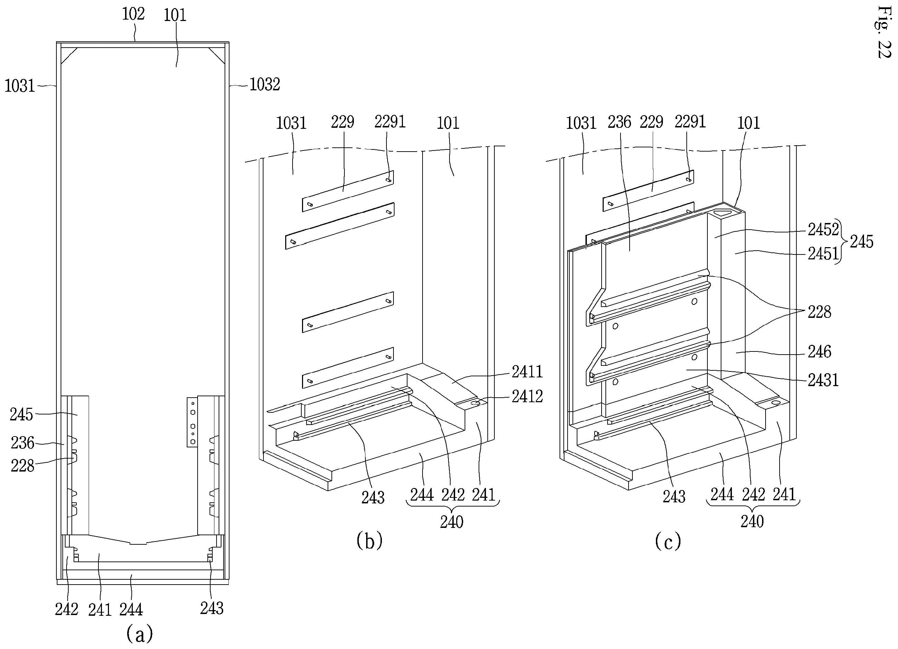

FIG. 22 is a conceptual diagram illustrating the second storage chamber drawer guide 228 in FIG. 19 being connected by the bolt plate 229.

The present embodiment is different from the embodiments of FIGS.1 to 18 described above in that the insulation block 230 is added to the interior of the multi-duct 225, the interior of the drawer guide 243 of the first storage chamber 105 and the second storage chamber 106, or the like. Hereinafter, descriptions overlapping with the above-described embodiments will be omitted, and descriptions will be focused on the differences.

The insulation block 230 may expand the insulation areas of the joints 220 and 223 by utilizing a dead space that does not affect the change in the internal volume of the refrigerator. For example, the dead space may be the interior of the multi-duct 225, the interior of the drawer guide plate 2431, and a portion of the second storage chamber 106.

The insulation block 230 may be formed integrally with the joints 220 and 223 or formed separately.

In the present embodiment, the insulation block 230 is illustrated as being formed integrally with the joints 220 and 223. The insulation block 230 may be arranged adjacent to the joints 220 and 223. A coupling hole may be formed in the insulation block 230. A bolt 2291 of the bolt plate 229 may pass through the coupling hole, and a coupler such as a nut may be coupled with the bolt 2291.

Through this configuration, the insulation block 230 may be coupled to the main body 100 by the bolt plate 229.

The insulation block 230 may be arranged at the corner where the second panel 101 and the first panel 103 are connected. The insulation block 230 may be arranged at the corner where the third panel 102 and the second panel 101 meet. The insulation block 230 may be arranged at the corner where the third panel 102 and the first panel 103 meet. The insulation block 230 may be arranged at the corner where the second panel 101, the first panel 103, and the third panel 102 meet. The insulation block 230 may also function as the joints 220 and 223.

The insulation block 230 includes a block cover 231 and an insulating material 232. The block cover 231 may be formed by injection molding a plastic resin. An insulating material 232, such as EPS, can be formed by filling the block cover 231.

The insulation block 230 may include at least one of a first insulation block 233 to an Nth insulation block.

The first insulation block 233 may be arranged inside a multi-duct cover 226. The first insulation block 233 may be arranged in the second panel 101.

The first insulation block 233 may extend from the first storage chamber joint 220. The first insulation block 233 may extend from the first joint 221 of the first storage chamber joint 220. The first insulation block 233 may extend from the second joint 222 of the first storage chamber joint 220.

The opening portion 234 may be formed in the first insulation block 233. The multi-duct 225 may be accommodated in the opening portion 234. The first insulation block 233 may be configured to surround the multi-duct 225.

The second insulation block 235 may extend in one direction along the surface of the first panel 103 of the first storage chamber 105. The first storage chamber drawer guide 227 may be formed to protrude toward the storage chamber from the second insulation block 235.

The second insulation block 235 may be arranged between the first storage chamber drawer guide 227 and the first panel 103. The second insulation block 235 may be formed in the first storage chamber drawer guide 227. The second insulation block 235 may be formed integrally with the second joint 222 of the first storage chamber joint 220.

The third insulation block 236 may extend in one direction along the surface of the first panel 103 of the second storage chamber 106. The second storage chamber drawer guide 228 may be formed to protrude toward the storage chamber from the third insulation block 236.

The third insulation block 236 may be arranged between the second storage chamber drawer guide 228 and the first panel 103. The third insulation block 236 may be formed in the second storage chamber drawer guide 228. The third insulation block 236 may be formed integrally with the second joint 224 of the second storage chamber joint 223.

The second insulation block 235 and the third insulation block 236 may be arranged spaced apart in one direction (for example, up and down).

The thicknesses of the second insulation block 235 and the third insulation block 236 extending in one direction may be formed differently.

A drawer insertion portion 237 may be formed in a portion (for example, a front end) of the third insulation block 236. The thickness of the drawer insertion portion 237 may be formed to be smaller than the thickness of the third insulation block 236. This provides the advantage of easy insertion and withdrawal of the drawer.

The evaporator 148 may be provided in the second panel 101 of the second storage chamber 106. The evaporator 148 may be arranged between at least two second joints 224 in the second storage chamber joints 223.

The insulation block 230 includes a fourth insulation block 240.

In the present embodiment, the second storage chamber joint 223 is different from the embodiments of FIGS. 5 to 18 described above in that the fourth insulation block 240 is additionally provided to expand the insulation areas of the joints 220 and 223.

The fourth insulation block 240 may be arranged in a portion of the second storage chamber 106 and may form a portion of the second storage chamber joint 223.

The fourth insulation block 240 may include a second block portion 241, a first block portion 242, and/or a fourth block portion 244.

The second block portion 241 extends from a portion of the second panel 101. The second block portion is positioned at the corner where the second panel 101 and the fourth panel 104 are connected. The second block portion 241 may serve as the joints 220 and 223 connecting the second panel 101 and the fourth panel 104. The second block portion 241 may form the first joints 221 and 121 of the second storage chamber joint 223 described above.

A recessed portion 2411 may be formed at a preset angle in a V shape on the surface of the second block portion 241. A drainage portion may be formed in the central portion of the recessed portion 2411 to be more recessed than the recess. Through portions 2412 and 1220 may be formed in a circular shape.

The evaporator 148 is arranged in a portion of the recess 2411. Condensate or defrost water generated in the evaporator 148 may be discharged to the outside of the refrigerator through the through portions 2412 and 1220.

The first block portion 242 is positioned at the corner where the second panel 101 and the first panel 103 are connected. The first block portion 242 extends from the end of the second block portion 241. The first block portion 242 may serve as joints 220 and 223 connecting the fourth panel 104 and the first panel 103. The first block portion 242 may form the third joint 119 of the second storage chamber joint 223 described above.

The drawer guide 243 may be formed in the first block portion 242. The first block portion 242 may form the same plane as the third insulation block 236. The drawer guide 243 of the first block portion 242 is arranged spaced apart from the drawer guide 243 of the third insulation block 236.

A first panel exhaust port accommodating groove 2422 that accommodates the first panel exhaust port 1274 may be arranged between the first panel 103 and the first block portion 242. The first panel exhaust port accommodating groove 2422 may be formed to be recessed in one direction in the first block portion 242 facing the surface of the first panel 103.

A drawer insertion portion 2421 may be formed in the first block portion 242. The thickness of the drawer insertion portion 2421 may be formed to be smaller than the thickness of the first block portion 242. This provides the advantage of easy insertion and withdrawal of the drawer.

The second storage chamber drawer guide plate 2431 may be configured to cover the first block portion 242 of the third insulation block 236 and the fourth insulation block 240. Through this configuration, the insulation performance between the side surface of the second storage chamber 106 and the drawer can be improved.

The fourth block portion 244 may be formed integrally with the second block portion 241 and the first block portion 242.

The first insulation block 233 to the fourth insulation block 240 may include the block cover 231 and the insulating material 232 as described above.

A return duct 245 may be provided in the second storage chamber 106. The return duct 245 is configured to return the cold air from the first storage chamber 105 so that the cold air can be circulated again to the second storage chamber 106.

The return duct 245 can be arranged adjacent to the second joint 224 of the second storage chamber joint 223.

The return duct 245 may be made of an insulating material. The return duct 245 may extend along the second joint 224 of the second storage chamber joint 223. The return duct 245 may include a duct cover and an insulating material. The duct cover forms the appearance of the return duct 245 and may be formed by injection molding. The duct cover may be filled with an insulating material such as EPS.

The return duct 245 may be formed to communicate with the second storage chamber 106. The return duct 245 may be connected to an evaporator accommodating portion in which the evaporator 148 is accommodated.

The return duct 245 is configured to surround at least one of third to sixth surfaces of the second joint 224 of the second storage chamber joint 223. The return duct 245 includes a first part 2451 and a second part 2452 facing the second storage chamber 106. The first part 2451 of the return duct 245 extends in one direction and may form the same plane as the third surface of the second joint 224 of the second storage chamber joint 223. The second part 2452 of the return duct 245 extends and may be connected to the first part 2451 and the third insulation block 236.

The return duct 245 may be coupled to the second joint 224 of the second storage chamber joint 223 by a third plate 246 extending from the drawer guide plate 2431.

Through this configuration, the return duct 245 can be in close contact with the first storage chamber 105 without exposing the second storage chamber joint 223 to the outside.

The third plate 246 may be provided in the second storage chamber 106. The third plate 246 may be coupled to the first plate 1081 of the second storage chamber 106 to cover the second storage chamber joint 223 and/or the insulation block 230. The third plate 246 may be arranged on the surface of the second storage chamber 106 and/or outside the vacuum space 1083.

In the present embodiment, the third plate 246 is illustrated as being arranged to cover the first block portion 242 (third joint 119) which is arranged at the corner of the second storage chamber joint 223 where the fourth panel 104 and the first panel 103 are connected.

Through this configuration, the third plate 246 can bring the joints 220 and 223 into close contact with the main body 100 without exposing the joints 220 and 223 to the outside.

Since other configurations are the same or similar to those of the embodiments of FIGS. 1 to 18 described above, repeated descriptions will be omitted.

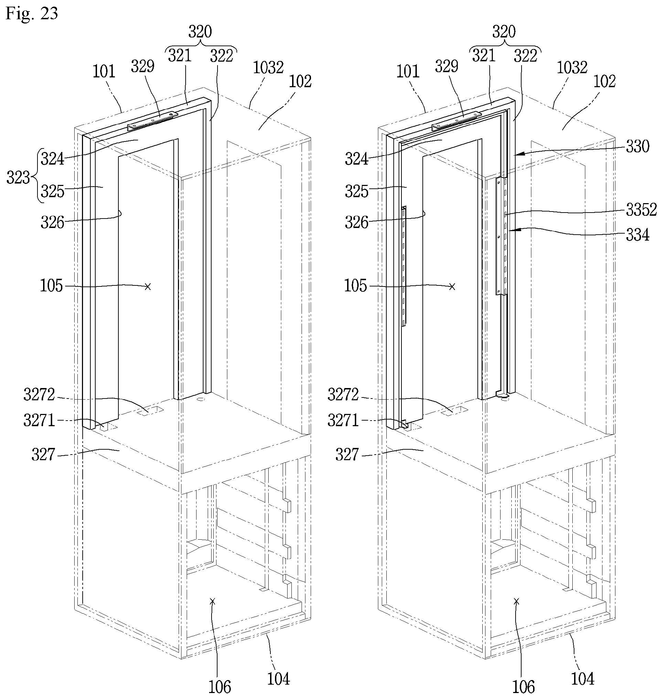

FIG. 23 is a conceptual diagram illustrating a structure in which a component coupler according to still another embodiment of the present disclosure brings a first storage chamber joint 320 into close contact with the surface of the main body 100.

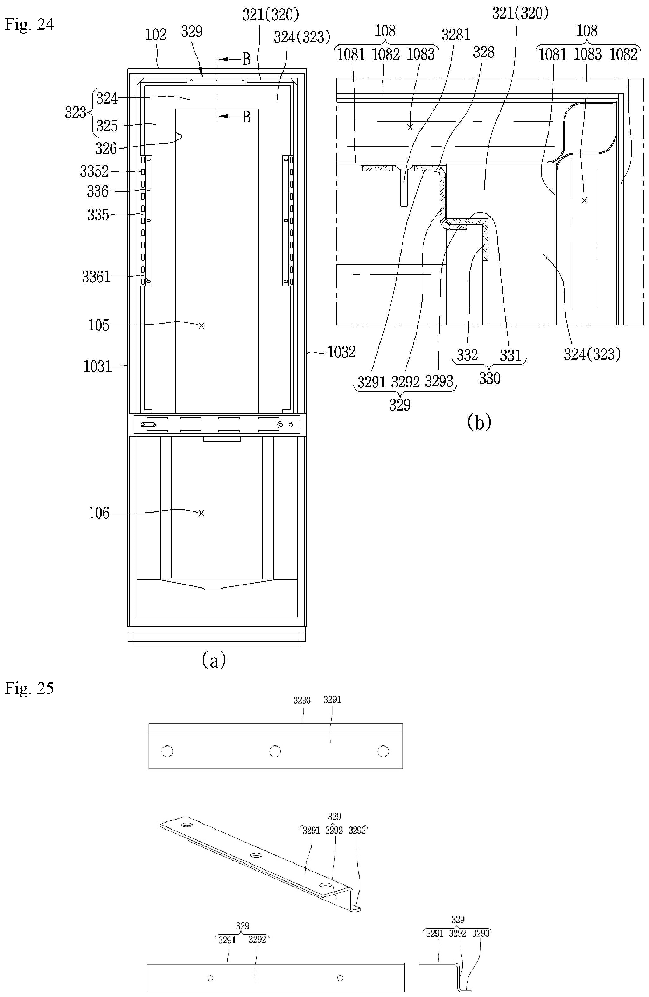

FIG. 24 is a conceptual diagram illustrating the structure in which the component couplers in FIG. 23 are coupled.

FIG. 25 is a conceptual diagram illustrating the structure of a bracket 329 that couples the component coupler in FIG. 24.

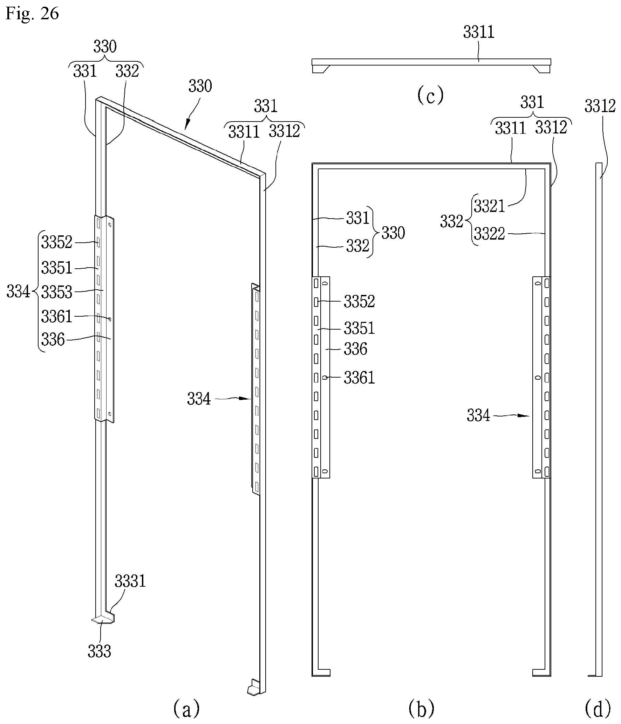

FIG. 26 is a conceptual diagram illustrating the component coupler in FIG. 23.

The present embodiment is different from the embodiments of FIGS. 1 to 22 in that the component coupler brings the first storage chamber joint 320 into close contact with the surface of the main body 100 for coupling.

The joint may include an insulation block 323 that expands the insulating area of the joint. In the present embodiment, the insulation block 323 is illustrated as being integrally formed with the joint. The insulation block 323 may be formed to extend in one direction along the surface of the main body 100 from one surface of the joint.

The joint 320 includes a first storage chamber joint 320.

The first storage chamber joint 320 may include a first joint 321 to an M-th joint.

In the present embodiment, the first storage chamber joint 320 is illustrated as including the first joint 321 and a second joint 322.

The first joint 321 of the first storage chamber joint 320 may extend from the second panel 101. The first joint 321 is positioned at the corner where the third panel 102 and the second panel 101 meet, and may connect the third panel 102 and the second panel 101.

The second joint 322 of the first storage chamber joint 320 may extend from the second panel 101. The second joint 322 is positioned at the corner where the second panel 101 and the first panel 103 meet, and may connect the second panel 101 and the first panel 103. A plurality of second joints 322 are provided. The second joints 322 extend from the end of the first joint 321 to the surface of the partition wall 327.

The insulation block 323 includes a first insulation block 324 extending along the first joint 321 between at least two second joints 322. The insulation block 323 includes a second insulation block 325 extending along the second joint 322 between the first joint 321 and the partition wall 327. A portion of the second insulation block 325 is connected to the first insulation block 324.

The second insulation block 325 may be provided in a plurality of blocks. Some of the second insulation blocks 325 are connected to the first insulation block 324.

The thicknesses of the first joint 321 and the second joint 322 are the same. The first joint 321 and the second joint 322 are integrally formed with each other.

The thicknesses of the first insulation block 324 and the second insulation block 325 are the same. The first insulation block 324 and the second insulation block 325 are integrally formed with each other.

The thickness of the first storage chamber joint 320 is greater than the thickness of the insulation block 323. The first storage chamber joint 320 is formed to surround the insulation block 323.

The first insulation block 324 is configured to connect a portion of the second insulation block 325. An opening portion 326 is formed in the central portion of the insulation block 323. The insulation block 323 is configured to surround at least three surfaces (for example, an upper surface, a left surface, and a right surface) of the opening portion 326. The partition wall 327 surrounds the remaining surface (for example, lower surface) of the opening portion 326.

A multi-duct may be accommodated in the opening portion 326. A multi-duct communication hole 3272 and a return duct communication hole 3271 are formed in the partition wall 327. The multi-duct may be connected to communicate with the second storage chamber 106 through the communication hole of the partition wall 327.

The first storage chamber joint 320 and the insulation block 323 may have a step formed at the connection portion between the first storage chamber joint 320 and the insulation block 323 due to a difference in thickness. In the present embodiment, the first storage chamber joint 320 has a rectangular cross-sectional shape.

The size of the first storage chamber joint 320 may be formed to correspond to the size of one surface of the first storage chamber 105. The shapes and sizes of the surfaces of the first storage chamber joint 320 and the first storage chamber 105 match each other, so that the corner of the first storage chamber joint 320 can be coupled to at least one of the surface of the first storage chamber 105 and the surface of the partition wall 327.

In order to more firmly couple the first storage chamber joint 320, the component coupler may be provided with a bolt plate 328 and a bracket 329.

The bolt plate 328 is installed on the third panel 102. The bolt plate 328 extends along the third panel 102. The bolt plate 328 may be arranged adjacent to a portion (for example, the rear end) of the third panel 102.

The bolt plate 328 may be arranged adjacent to the first joint 321 of the first storage chamber joint 320. The length of the bolt plate 328 may be shorter than the length of the first joint 321 of the first storage chamber joint 320. The center of the bolt plate 328 may be arranged to overlap the center of the first joint 321 of the first storage chamber joint 320.

The bracket 329 according to the present embodiment includes a coupling plate 3291 and a first contact plate 3292. The coupling plate 3291 is extended. The coupling plate 3291 may be arranged to overlap the bolt plate 328. A coupling hole 3361 is formed in the coupling plate 3291. The coupling hole 3361 is formed at a position corresponding to the bolt 3281 of the bolt plate 328. Through this configuration, the bolt 3281 passing through the coupling hole 3361 is coupled with a nut, so that the coupling plate 3291 is coupled to the third panel 102.

The first contact plate 3292 is formed to extend from a portion (for example, the rear end) of the coupling plate 3291. The first contact plate 3292 may be arranged to overlap and be connected to the surface of the first joint 321 of the first storage chamber joint 320. In this way, the first contact plate 3292 brings the first joint 321 into close contact, thereby restricting the movement of the first joint 321 relative to the second panel 101.

The bracket 329 may include a second contact plate 3293. The second contact plate 3293 is formed to extend from a portion (for example, the lower end) of the first contact plate 3292. The second contact plate 3293 may be arranged to overlap and be connected to a surface of the first joint 321 of the first storage chamber joint 320. In this way, the second contact plate 3293 may support the surface of the first joint 321, thereby restricting movement of the first joint 321.

The component coupler may include the contact frame 330. The contact frame 330 is configured to bring the first storage chamber joint 320 into close contact with the surface of the first storage chamber 105 for coupling.

The contact frame 330 may be arranged at the corner portion where the first storage chamber joint 320 and the insulation block 323 are connected.

The contact frame 330 includes a first plate portion 331. The first plate portion 331 is formed to surround the surface of the first storage chamber joint 320.

The first plate portion 331 includes a first horizontal portion 3311 and a first vertical portion 3312. The first horizontal portion 3311 extends to a length corresponding to the surface length of the first joint 321 of the first storage chamber joint 320, and is arranged to face the first joint 321 of the first storage chamber joint 320.

The second vertical section 3322 extends from both ends of the horizontal section to have a length corresponding to the surface length of the second joint 322 of the first storage chamber joint 320, and is arranged to face and be connected to the second joint 322 of the first storage chamber joint 320.

Through this configuration, the first plate portion 331 is connected to the first storage chamber joint 320, so that the first storage chamber joint 320 and/or the insulation block 323 may be closely connected to the first storage chamber 105.

The contact frame 330 may include a second plate portion 332. The second plate portion 332 is configured to surround a portion of the insulation block 323. The second plate portion 332 may be formed integrally with a portion (for example, the rear end) of the first plate portion 331.

The second plate portion 332 includes a second horizontal portion 3321 and a second vertical portion 3322. The second horizontal portion 3321 has a length corresponding to the length of the insulation block 323, extends along the insulation block 323, and is arranged to overlap and be connected to a portion of the insulation block 323.

The second vertical portion 3322 may have a length corresponding to the length of the end (for example, the left and/or right end) of the insulation block 323. The second vertical portion 3322 extends along the end (for example, the left and/or right end) of the insulation block 323 and is arranged to overlap and be connected to the end (for example, the left and/or right end) of the insulation block 323.

Through this configuration, the second plate portion 332 is connected to a part of the insulation block 323, so that the first storage chamber joint 320 and/or the insulation block 323 can be closely coupled to the first storage chamber 105.

The contact frame 330 may include a support portion 333. The support portion 333 extends in one direction (for example, horizontally) from a portion of the corner where the first plate portion 331 and the second plate portion 332 are connected. The support portion 333 may be connected to the first plate portion 331 and the second plate portion 332.

The support portion 333 may be formed to be connected to the surface of the partition wall 327. The support portion 333 may be formed in a polygonal shape. In the present embodiment, the support portion 333 is formed in a pentagonal shape. One side of the support portion 333 is connected to a corner of a portion (for example, the lower end) of the first plate portion 331. One side of the support portion 333 may extend longer than the width of the first plate portion 331.

The other side of the support portion 333 is connected to a corner (for example, the lower end) of a part of the second plate portion 332. The other side of the support portion 333 may extend longer than the width of the second plate portion 332.

Through this configuration, the area of the support portion 333 may be formed to be larger than the product of the width of the first plate portion 331 and the width of the second plate portion 332. Through this configuration, the support portion 333 can stably support a portion of the contact frame 330.

The support portion 333 can improve the support strength of the contact frame 330 by connecting the first plate part 331 and the second plate part 332.

The contact frame 330 may include a protruding rib 3331. The protruding rib 3331 may be formed to extend from a portion (for example, the lower end) of the second plate portion 332.

The protruding rib 3331 may be connected to the other side of the support portion 333.

Through this configuration, the protruding rib 3331 is connected to the second plate portion 332 and the support portion 333, thereby further improving the support strength of the contact frame 330.

The contact frame 330 may include a shelf-hanging plate 334.

The shelf-hanging plate 334 is configured to couple the shelf 130 to the interior of the main body 100.

The shelf-hanging plate 334 may be provided on the contact frame 330. The shelf-hanging plate 334 may be connected to a first plate portion 331 of the contact frame 330.

The shelf-hanging plate 334 may extend along the first plate portion 331. The length of the shelf-hanging plate 334 may be formed to be smaller than the length of the second joint 322 of the first storage chamber joint 320.

The position and length of the shelf-hanging plate 334 may vary depending on the coupling position of the shelf 130.

The shelf-hanging plate 334 includes a first part 335.

The first part 335 is a part where a part of the shelf 130 is caught. The first part 335 may be formed in the first plate part 331 of the contact frame 330 so that a part of the shelf 130 is caught.

The first part 335 includes a connecting wall 3351. The connecting wall 3351 is formed to protrude in one direction from the first plate portion 331 and extend along the first plate portion 331.

The connecting wall 3351 may be arranged facing the second plate portion 332 at a constant interval. An insertion space is formed in the connecting wall 3351.

The connecting wall 3351 has a through hole 3352. At least two through holes 3352 may be spaced apart along the connecting wall 3351.

A plurality of through holes 3352 are formed to pass through the connecting wall 3351 in one direction. The through holes 3352 can be spaced apart from the connecting wall 3351.

The coupling protrusion of the shelf 130 may be inserted and connected into the insertion space inside the connecting wall 3351 through the through hole 3352. Through this configuration, the shelf 130 may be supported by and connected to the connecting wall 3351.

The first part 335 may include a side wall 3353. The side wall 3353 may extend from an end (for example, the left and/or right end) of the connecting wall 3351 toward the insulation block 323. The side wall 3353 may extend along the connecting wall 3351. The side wall 3353 may connect a second part 336, which will be described later, and a first part 335. The side wall 3353 may be arranged to face the first plate portion 331 in one direction at a constant interval.

The shelf-hanging plate 334 includes the second part 336. The second part 336 is configured to couple the shelf-hanging plate 334 to the main body 100. The second part 336 may be formed in a plate shape. The second part 336 may be extended. The second part 336 is arranged to be connectable to the surface of the insulation block 323.

The coupling hole 3361 may be formed to pass through in one direction in the second part 336. The coupling holes 3361 are arranged spaced apart from each other.

The bolt 3281 of the bolt plate 328 passes through the coupling hole 3361 of the insulation block 323 and the coupling hole 3361 of the second part 336, and as the nut is coupled to the bolt 3281, the shelf-hanging plate 334 may be coupled to the second panel 101 together with the insulation block 323.

Since other components are the same or similar to those of the embodiments of FIGS.1 to 26 described above, repeated descriptions will be omitted.

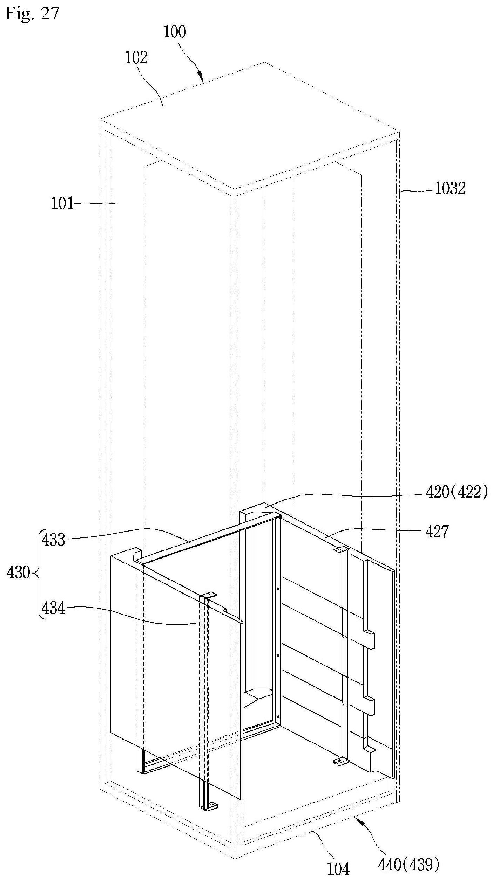

FIG. 27 is a conceptual diagram illustrating a structure in which a component coupler according to still another embodiment of the present disclosure brings a second storage chamber joint 420 into close contact with the surface of the main body 100.

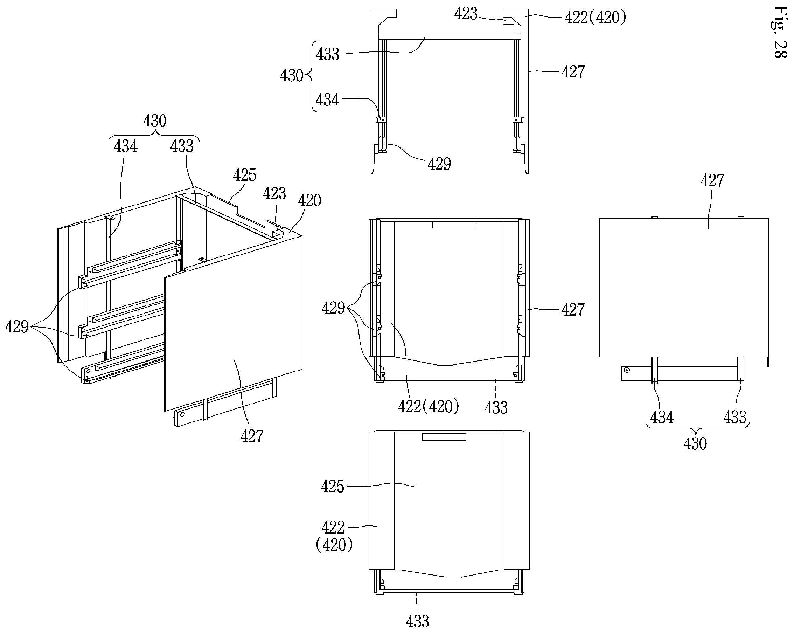

FIG. 28 is a conceptual diagram illustrating the component coupler being coupled inside the second storage chamber joint 420 of FIG. 27.

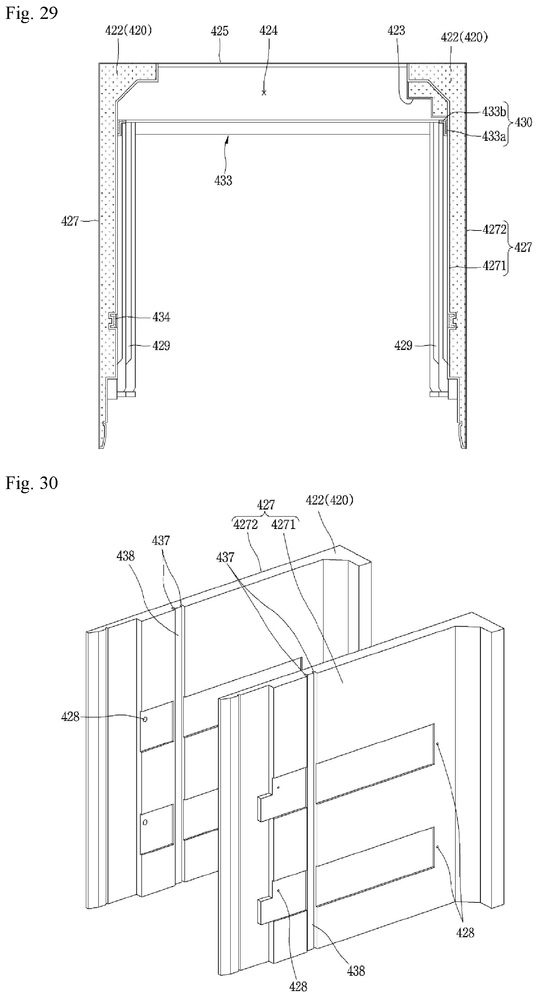

FIG. 29 is a cross-sectional view taken along line XXXVI-XXXVI of FIG. 28.

FIG. 30 is an exploded view illustrating a state where a block cover 4271 and an insulating material 4272 of the third insulation block 427 in FIG. 28 are disassembled.

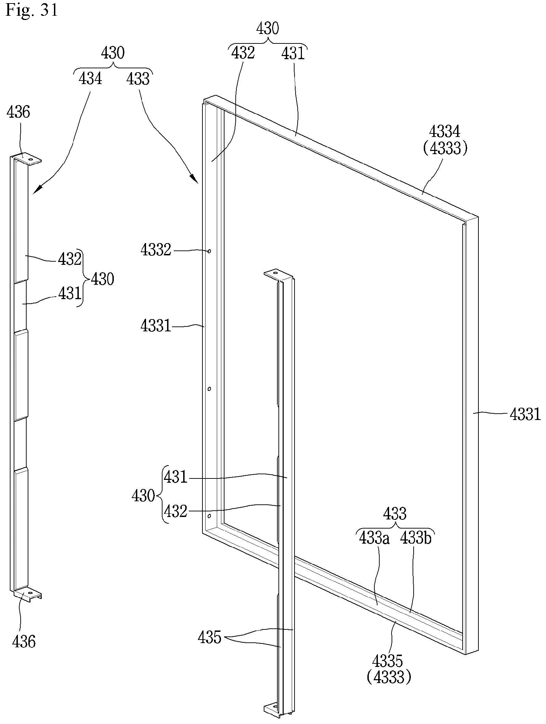

FIG. 31 is a perspective view illustrating the component coupler of FIG.28.

The present embodiment differs from the embodiments of FIGS. 1 to 26 described above in that the component coupler brings the second storage chamber joint 420 and/or the third insulation block 427 into close contact with the second storage chamber 106.

The second storage chamber joint 420 may be integrally formed with the third insulation block 427. In the present embodiment, the second joint 422 of the second storage chamber joint 420 and the third insulation block 427 are illustrated as being integrally formed with each other.

A return duct 423 may be provided in at least one of the two second joints 422. In the present embodiment, the return duct 423 may be arranged in the second joint 422 positioned at least on one side (for example, the right side) of the two second joints 422.

A cover 425 may be installed to cover the surface of an evaporator accommodating portion 424 between at least two second joints 422. A portion of the cover 425 may be connected to the surface of the first joint 321 of the second storage chamber joint 420.

The third insulation block 427 includes a block cover 4271 and an insulating material 4272. The block cover 4271 may be injection-molded from a plastic material. In the insulating material 4272, the block cover 4271 may be filled with an insulating material such as EPS. The block cover 4271 may be extended to cover the second joint 422 of the second storage chamber joint 420.

A drawer guide 429 that guides the withdrawal and entry of the second storage chamber drawer is coupled to the third insulation block 427. A coupling hole 428 may be formed to pass through the third insulation block 427 in one direction.

The coupling hole 428 is formed to overlap each of the insulating material 4272 and the block cover 4271 of the third insulation block 427 in one direction.

The coupling hole 428 may be arranged spaced apart from the third insulation block 427 in one direction. The coupling hole 428 may be arranged spaced apart from the third insulation block 427.

The coupling hole 428 may also be formed to pass through the second storage chamber drawer guide 429 in one direction. The coupling hole 428 may be arranged spaced apart from the second storage chamber drawer guide 429 in one direction.

As a coupler such as a screw passes through the coupling hole 428 of the drawer guide 429 of the second storage chamber 106 and the coupling hole 428 of the third insulation block 427 for coupling, the second storage chamber drawer guide 429 may be connected to the third insulation block 427.

The component coupler includes a contact frame 430. The contact frame 430 may be configured to bring the second storage chamber joint 420 and/or the third insulation block 427 into close contact.

The contact frame 430 includes a frame body 431 and a frame cover 432. The frame body 431 forms the skeleton of the contact frame 430. The frame cover 432 is configured to cover at least one surface of the frame body 431. The frame cover 432 and the frame body 431 may have different materials and/or rigidities.

For example, the frame body 431 may be made of a metal material and/or the frame cover 432 may be made of a plastic material. The frame cover 432 may be used as an exterior material of the contact frame 430.

The contact frame 430 includes a first contact frame 433. The first contact frame 433 may be arranged at the connection portion between the second joint 422 of the second storage chamber joint 420 and the third insulation block 427.

The first contact frame 433 may be formed in a square shape. The first contact frame 433 includes a vertical frame portion 4331 and a horizontal frame portion 4333.

The vertical frame portion 4331 extends between the partition wall and the fourth panel 104. One end of the vertical frame portion 4331 may be arranged adjacent to the surface of the partition wall. The other end of the vertical frame portion 4331 is arranged adjacent to the surface of the fourth block portion 440 of the fourth insulation block 439 or the fourth panel 104.

The vertical frame portion 4331 may be arranged to face and be connected to the third insulation block 427 in one direction. The coupling hole 428 may be formed in the vertical frame portion 4331. The coupling hole 428 of the vertical frame portion 4331 is formed to pass through in an overlapping manner with the coupling hole 428 of the third insulation block 427 in one direction.

The horizontal frame portion 4333 may include a first horizontal frame portion 4334 and a second horizontal frame portion 4335. The first horizontal frame portion 4334 is configured to connect one end of at least two vertical frame portions 4331, and/or the second horizontal frame portion 4335 is configured to connect the other end of at least two vertical frame portions 4331.

The first horizontal frame portion 4334 may be arranged so as to face and be connected to the surface of the partition wall. The second horizontal frame portion 4335 may be arranged so as to face and be connected to the surface of the fourth block portion 440.

At least one of the horizontal frame portion 4333 and the vertical frame portion 4331 may have an L-shaped cross-sectional shape. At least one of the horizontal frame portion 4333 and the vertical frame portion 4331 may include a first plate portion 433a and a second plate portion 433b. The second plate portion 433b may extend inward from a portion (for example, a rear end) of the first plate portion 433a. The first plate portion 433a is formed to surround the second plate portion 433b. However, the contact frame 430 is not limited thereto and may have various cross-sectional shapes.

A coupler such as a screw is coupled by passing through the coupling hole 4332 of the first contact frame 433 and the coupling hole 428 of the third insulation block 427.

The first contact frame 433 does not require a bolt plate, and may be closely coupled by bringing the second joint 422 of the second storage chamber joint 420 and the third insulation block 427 into close contact with the surface of the first panel 103.

At least two second contact frames 434 may arranged spaced apart from the vertical frame portion 4331 of the first contact frame 433.

The second contact frame 434 may extend from the third insulation block 427. A portion (for example, the upper end) of the second contact frame 434 may be connected to the surface of the partition wall. A portion (for example, the lower end) of the second contact frame 434 may be connected to the fourth block portion 440.

The second contact frame 434 may be arranged to face the third insulation block 427 in one direction. The second contact frame 434 may be arranged between the third insulation block 427 and the second storage chamber drawer guide 429.

A frame coupling groove 438 may be provided in the third insulation block 427. The frame coupling groove 438 is formed to be recessed in one direction (for example, the left or right direction) of the third insulation block 427. The frame coupling groove 438 may extend from the third insulation block 427. The frame coupling groove 438 may be formed in at least one of the block cover 4271 and the insulating material 4272.

The second contact frame 434 may be inserted and coupled into the frame coupling groove 438. The surface of the second contact frame 434 and the surface of the third insulation block 427 may form the same plane. Through this configuration, the movement of the second contact frame 434 may be restricted in a state where the second contact frame 434 is coupled to the frame coupling groove 438 of the third insulation block 427.

The second contact frame 434 may include a coupling rib 435. At least two coupling ribs 435 may be provided at both ends of the second contact frame 434. The coupling ribs 435 are formed to protrude from the second contact frame 434 toward the third insulation block 427. The coupling ribs 435 extend along the second contact frame 434.

On both sides of the frame coupling groove 438, a plurality of rib accommodating grooves 437 are formed to be recessed further in one direction (for example, the left or right direction) than the frame coupling groove 438.

The coupling rib 435 may be inserted and coupled into the rib accommodating groove 437. Through this configuration, the coupling rib 435 may increase the coupling force between the second contact frame 434 and the third insulation block 427. The coupling rib 435 may restrict the movement of the second contact frame 434 in one direction relative to the third insulation block 427.

The second contact frame 434 may include a fastening tab 436.

The fastening tab 436 may extend from the end of the second contact frame 434. The extension length of the fastening tab 436 in one direction may be smaller than or equal to the length of the first surface of the second joint 422 of the second storage chamber joint 420 in the one direction. In the present embodiment, the length of the fastening tab 436 is illustrated as being smaller than the length of the second joint 422.

Among at least two coupling portions 436, the fastening tab 436 positioned at one end of the second contact frame 434 may be coupled to the partition wall. The fastening tab 436 positioned at the other end of the second contact frame 434 may be coupled to the fourth block portion 440. A coupling hole is formed in the fastening tab 436. A coupler, such as a screw, may pass through the coupling hole of the fastening tab 436 and be coupled to the partition wall and the fourth block portion 440. Through this configuration, the fastening tab 436 is connected to the partition wall and the fourth block portion 440, and the second contact frame 434 may be coupled to the third insulation block 427. The second contact frame 434 may be restricted from being separated from the third insulation block 427 in one direction.

After at least one of the first contact frame 433 and the second contact frame 434 is coupled to the third insulation block 427, the drawer guide 429 may be coupled to the third insulation block 427 by a coupler such as a second screw.

The coupler such as a screw is coupled through a coupling hole 428 of the third insulation block 427, a coupling hole 4332 of the first contact frame 433, and/or a coupling hole 428 of the drawer guide 429. The vertical frame portion 4331 of the first contact frame 433 is arranged to cover a portion of the third insulation block 427, and a portion (for example, a rear end) of the drawer guide 429 is arranged to cover a portion of the first contact frame 433. The first contact frame 433 and the second drawer guide 429 of the second storage chamber 106 are arranged to intersect each other.

Accordingly, the first contact frame 433 may bring the third insulation block 427 and/or the second storage chamber joint 420 into close contact in one direction for coupling. The first contact frame 433 and the second drawer guide 429 may support each other by intersecting and being coupled in one direction (for example, perpendicular to each other).

The second contact frame 434 may bring the third insulation block 427 and/or the second storage chamber joint 420 into close contact in one direction for coupling. The second contact frame 434 and the third insulation block 427 may be coupled to each other. The second contact frame 434 and the second drawer guide 429 may support each other by intersecting in one direction (for example, perpendicular to each other).

The second drawer guide 429 positioned in the second drawer guide 429 of the second storage chamber 106 may be coupled to the first block portion of the fourth insulation block 439. The drawer guide 429 is arranged to cover at least one of a part of the second horizontal frame portion 4335 of the first contact frame 433 and the fastening tab 436 of the second contact frame 434.

Since other components are the same or similar to those of the embodiments of FIGS. 1 to 26 described above, repeated descriptions will be omitted.

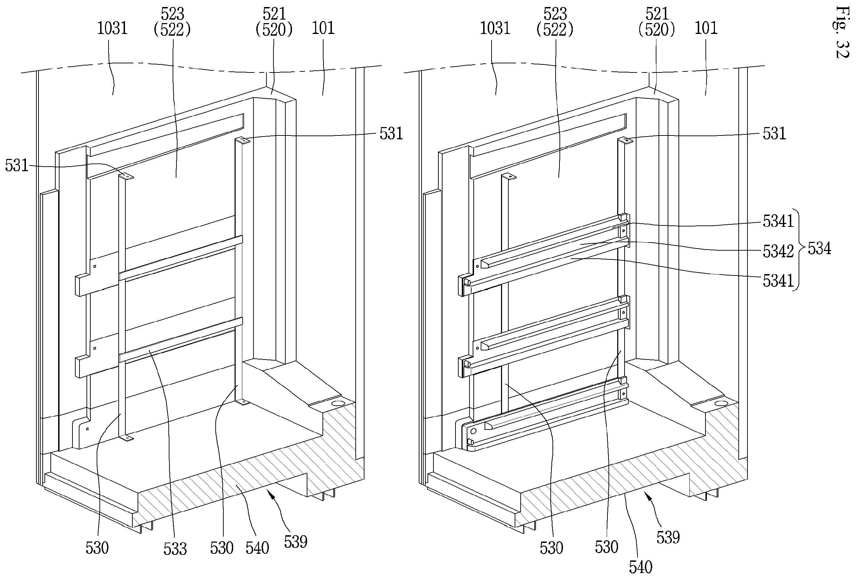

FIG. 32 is a conceptual diagram illustrating a structure in which a component coupler according to still another embodiment of the present disclosure brings a second storage chamber joint 520 into close contact with the surface of the main body 100.

The present embodiment differs from the embodiments of FIGS. 1 to 26 described above in that the contact frame 530 brings the second storage chamber joint 520 and/or an insulation block 522 into close contact with the surface of the second storage chamber 106 for coupling.

However, the present embodiment is similar to the embodiment of FIGS. 27 to 31 described above in that the second storage chamber joint 520 and/or the insulation block 522 are brought into close contact using at least two contact frames 530 spaced apart from each other in one direction, but a portion of the structure of the contact frame 530 is different from that of the embodiment of FIGS. 27 to 31 described above.

The component coupler includes the contact frame 530. The contact frame 530 may be coupled to an insulation block 522. The contact frame 530 may be formed in a plate shape. The contact frame 530 may extend from the insulation block 522 between the surface of the partition wall and the surface of the fourth block portion 540. At least two contact frames 530 may be arranged spaced apart from each other in one direction of the insulation block 522.

A fastening tab 531 may be provided in at least one of one surface and the other surface of the contact frame 530. The fastening tab 531 may extend from one surface of the contact frame 530. A coupling hole may be formed in the fastening tab 531. A coupler, such as a screw, may be coupled to the partition wall and the fourth block portion 540 through the coupling hole.

Through this configuration, a portion of the contact frame 530 may be coupled to the partition wall and/or another portion of the contact frame 530 may be coupled to the fourth block portion 540.

A frame coupling groove may be formed in the insulation block 522. The frame coupling groove may be formed concavely to correspond to the contact frame 530. The frame coupling groove may extend from the insulation block 522. The contact frame 530 may be inserted and coupled into the frame coupling groove.

Through this configuration, the frame joint groove may restrict the movement of the contact frame 530 in one direction. When the contact frame 530 is inserted and connected into the frame joint groove, one surface of the contact frame 530 and the surface of the insulation block 522 may form the same plane.

In addition, the contact frame 530 may bring the insulation block 522 and/or the second storage chamber joint 520 into close contact with the surface of the first panel 103.

The contact frame 530 may restrict the movement of the insulation block 522 and/or the second storage chamber joint 520 in one direction.

One of at least the two contact frames 530 may be coupled to the insulation block 522 by a coupler such as a screw. In the present embodiment, the contact frame 530 positioned at the part where the second joint 521 of the second storage chamber joint 520 and the insulation block 522 are connected is illustrated as being coupled by the coupler.

A connecting frame 533 may be arranged between at least two contact frames 530. The connecting frame 533 may extend in one direction along the insulation block 522. The connecting frame 533 may connect at least two contact frames 530.

A second storage chamber drawer guide 534 may be coupled to the insulation block 522. The second storage chamber drawer guide 534 may extend in one direction along the insulation block 522. At least two second storage chamber drawer guides 534 may be arranged spaced apart from each other on the insulation block 522.

The drawer guide 534 may be provided with a guide protrusion 5341. The guide protrusion 5341 may extend in the longitudinal direction of the drawer guide 534. An accommodating portion 5342 may be formed between at least two guide protrusions 5341. An insertion protrusion may be formed to protrude from the side surface of the drawer. The insertion protrusion of the drawer may be inserted into and coupled with the accommodating portion 5342 when the drawer is drawn in and out.

The second storage chamber drawer guide 534 may intersect with the contact frame 530 in one direction (for example, perpendicular to each other). The second storage chamber drawer guide 534 may be arranged to cover the contact frame 530. In this way, the second storage chamber drawer guide 534 may restrict the movement of the contact frame 530 in one direction.

The second storage chamber drawer guide 534 may be coupled to the insulation block 522 by a coupler such as a screw or the like. A coupling hole 428 may be formed on one side (for example, a front end) and/or the other side (for example, a rear end) of the second storage chamber drawer guide 534. The coupler passes through the coupling hole 428 of the drawer guide 534 and the coupling hole 428 of the insulation block 522 to be coupled, thereby allowing the drawer guide 534 and the insulation block 522 to be coupled to each other.

The contact frame is coupled by bringing the insulation block 522 into close contact with the surface of the first panel 103, so that the insulation block 522 and the second storage chamber drawer guide 534 may be coupled to the first panel 103.

Since other components are the same or similar to those of the embodiments of FIGS.1 to 32 described above, repeated descriptions will be omitted.

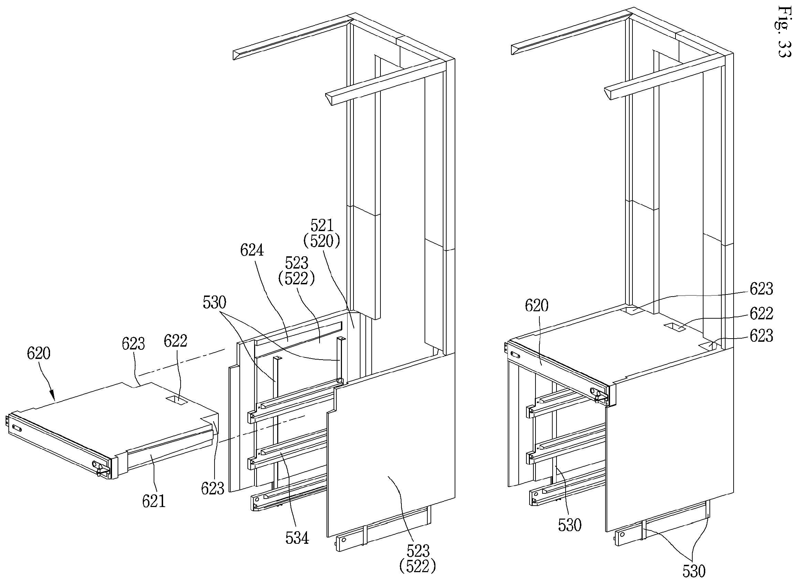

FIG. 33 is a conceptual diagram illustrating the state before and after a partition wall 620 is coupled to the insulation block 522 of the second storage chamber 106 according to still another embodiment of the present disclosure.

The insulation block 522 positioned in the second storage chamber 106 may be further extended in one direction to surround at least one of one surface and the other surface of the partition wall 620.

An insertion groove 624 into which the end (for example, a left or right end) of the partition wall 620 is inserted and coupled may be formed on the surface of the insulation block 522.

The insertion groove 624 may extend in one direction of the insulation block 522. The length (for example, a vertical width) of the insertion groove 624 in the one direction may be formed to become narrower from one side (for example, a front end) to the other side (for example, a rear end) of the third insulation block 523.

A side guide portion 621 may be formed to protrude in one direction from a portion (for example, a left or right surface) of the partition wall 620. The side guide portion 621 may be formed to correspond to the insertion groove 624. The length (for example, a vertical width) of the side guide portion 621 in the one direction may be formed to become narrower from one side (for example, a front end) of the insulation block 522 to the other side (for example, a rear end).

Through this configuration, the side guide portion 621 of the partition wall 620 may be easily inserted and coupled into the insertion groove 624.

When the partition wall 620 is inserted and coupled between at least two insulation blocks 522 positioned on each of the left and right surfaces of the first panel 103, the insulation blocks 522 may be in close contact with the surface of the first panel 103.

A duct connecting portion 622 may be formed to pass through a portion (for example, the rear end) of the partition wall 620. The duct connecting portion 622 is a hole that forms a flow path for communicating the evaporator accommodating portions 5342 and 424 of the second storage chamber 106 with the multi-duct of the first storage chamber 105. The duct connecting portion 622 may be arranged in a portion (for example, the central portion of the rear end) of the partition wall 620.

A return duct forming portion 623 may be formed in a portion (for example, a left and/or right end of rear end) of the partition wall 620. The return duct forming portion 623 may be formed to be recessed in a portion of the partition wall 620 (for example, a left and/or right end of the rear end). The return duct forming portion 623 forms a flow path connecting the first storage chamber 105 and the second storage chamber 106 so that cold air from the first storage chamber 105 is circulated to the second storage chamber 106.

Since other components are the same or similar to those of the embodiments of FIGS. 1 to 32 described above, repeated descriptions will be omitted.

Accordingly, according to the present disclosure, the main body 100 of the refrigerator is manufactured by assembling at least two panels 101, 102, 103, and 104 made of the vacuum heat insulator, and the joint 110 made of the insulating material 112 is arranged at the corner portion where the plurality of vacuum insulation panels are connected to reinforce the insulation of the corner portion.

Second, the bolt plate 109 is installed on at least two panels 101, 102, 103, and 104, and the bolt 1095 is formed to protrude from the bolt plate 109. The coupling portions 1164, 118, and 124 in which the coupling hole is formed are provided in the joint 100. The bolt 1095 passes through the coupling hole 428 of the coupling portion, and as the nut is coupled to the bolt 3281, the joint 110 can be easily coupled to the main body 100, such as the second panel 101, by the bolt plate.

Third, insulation blocks 230, 323, 427, and 439 may be integrally formed with the joints 220, 320, and 420. The insulation blocks 230, 323, 427, and 439 can expand the insulation area of the joints 220, 320, and 420. The insulation blocks 230, 323, 427, and 439 can be arranged to use a space which does not change the internal volume of the refrigerator.

Fourth, the insulation block 230 can be coupled by the bolt plate 229 installed on the main body 100. The coupling hole is formed in the insulation block 230. The bolt 2291 of the bolt plate 229 passes through the coupling hole of the insulation block 230, and as the nut is coupled to the bolt 2291, the insulation block 230 can be easily coupled to the main body 100, such as the second panel 101 and the first panel 103, by the bolt plate 229.

Fifth, the contact frames 330, 430, and 530 can be coupled to the joints 320, 420, and 520 or the insulation block 522 with which the joint 320 is integrally formed. The coupling hole 428 is formed in the contact frames 330, 430, and 530. The contact frames 330, 430, and 530 may be coupled to the main body 100 by the bolt plate 328 or coupled to the main body 100 without the bolt plate 328. Since the coupler such as a screw is coupled by passing through the coupling hole of the insulation blocks 427, 439, and 522 and the coupling hole 428 of the contact frames 430 and 530, the contact frames 430 and 530 can bring the insulation blocks 427, 439, and 522 into close contact with the surface of the main body 100 without the bolt plate. The extension ribs 114 and 125 may be extended along the longitudinal direction of the joints 320, 420, and 520. The contact frames 330, 430, and 530 may press the extension ribs 114 and 125 or directly press the joint 320 to bring the joint 320 into close contact with the surface of the main body 100 for coupling.

Sixth, the components arranged inside the main body 100, such as the shelf 130 or drawer, can be coupled to the main body 100 by having a separate first component coupler 131. The first component coupler 131 having the through hole 1324 or the drawer guides 1411 and 1421 may be easily coupled to the main body 100 by means of the bolt plate 109. The bolt 1095 of the bolt plate 109 passes through the coupling hole of the first component coupler 131, and as the nut is coupled to the bolt 1095, the shelf 130 may be easily coupled to the main body 100. The bolts 1091 and 2291 of the bolt plates 109 and 229 passes through the coupling hole of the drawer guides 1411, 1421, 227, and 228, and as the nut is coupled to the bolts 1091 and 2291, the drawer guides 1411, 1421, 227, and 228 may be easily coupled to the main body 100.

Seventh, a portion of the contact frames 430 and 530 may be coupled to the partition wall 620. Another portion of the contact frames 430 and 530 may be coupled to the fourth block portions 440 and 540, which are insulation blocks 439 and 522 of the fourth panel 104. Since the drawer guides 429 and 534 are coupled to the insulation blocks 439 and 522 by the coupler such as a screw, the contact frame 530 may easily bring the insulation blocks 439 and 522 and/or the drawer guides 429 and 534 into close contact with the surface of the first panel 103 for coupling.

Eighth, the contact frames 430 and 530 are coupled to the insulation blocks 439 and 522 formed integrally with the second storage chamber joint 520. Through this configuration, the contact frames 430 and 530 may easily couple the second storage chamber joint 520 or the insulation blocks 439 and 522 to the main body 100. Since the contact frames 430 and 530 do not require the bolt plate, it not only prevents heat leakage through the corner, but also enhances insulation performance.

**[DETAILED DESCRIPTION OF MAIN ELEMENTS]**

| | | | |
|---|---|---|---|
| 10, 1: | refrigerator | 2: | main body |
| 3: | door | 4: | compressor |
| 5: | condenser | 6: | expander |
| 7: | evaporator | 8: | machine room |
| 9: | cavity | 10: | vacuum heat insulator |
| 10a: | first vacuum heat insulator | 10b: | second vacuum heat insulator |
| 11: | first plate | 11a: | first part |
| 11b: | second part | 11c: | extended part |
| 11d: | branch | 12: | second plate |
| 12a: | first part | 12b: | second part |
| 12c: | third part | 12d: | extended part |
| 12e: | branch | 13: | third plate |
| 14: | side plate | 14a: | first part |
| 14b: | second part | 14c: | extended part |
| 14d: | branch | 15: | vacuum space section |
| 16: | vacuum space expansion portion | 16a: | x-direction extension portion |
| 16b: | y-direction extension portion | 17: | connecting frame |
| 18: | sealing portion | 19: | support |
| 20: | bar | 21: | connecting plate |
| 22: | support plate | 23: | radiation resistance sheet |
| 24: | shield | 26: | conduction resistance sheet |
| 28: | additional heat insulator | 29a: | central portion heat insulator |
| 29d: | periphery heat insulator | 30: | joint |
| 31: | port | 32: | conduit |
| 33: | film | 34: | porous material |
| 100: | main body | 101: | second panel |
| 102: | third panel | 103: | first panel |
| 1031: | one of first panels | 1032: | another of first panels |
| 104: | fourth panel | 105: | first storage chamber |
| 106: | second storage chamber | 107: | partition wall |
| 108: | vacuum heat insulator | 1081: | first plate |
| 1082: | second plate | 1083: | vacuum space |
| 109: | bolt plate | 1091: | first bolt plate |
| 1092: | second bolt plate | | |
| 1093: | bolt plate for installing first storage chamber drawer guide | | |
| 1094: | bolt plate for installing second storage chamber drawer guide | | |
| 1095: | bolt | 110: | joint |
| 111: | joint cover | 112: | joint insulation |
| 114: | extension rib | 115: | first storage chamber joint |
| 116: | first joint | 1164: | first coupling portion |
| 117: | second joint | 118: | second coupling portion |
| 119: | third joint | 120: | second storage chamber joint |
| 121: | first joint | 1211: | first surface |
| 1212: | accommodating groove | 1213: | second surface |
| 1214: | first hole | 1215: | second panel exhaust port |
| 1216: | second hole | 1217: | suction line heat exchanger outlet (SLHX) |
| 1218: | third surface (upper surface) | 1219: | recessed portion |
| 1220: | through portion | 1221: | overflow prevention plate |
| 1222: | fourth surface | 1223: | fifth surface |
| 1224: | fourth panel exhaust port | 123: | second joint |
| 1231: | first surface | 1232: | second surface |
| 1233: | third surface | 1234: | fourth surface |
| 1235: | fifth surface | 1236: | sixth surface |
| 1237: | seventh surface | 124: | third coupling portion |
| 125: | extension rib | 126: | rib accommodating groove |
| 127: | third joint | 1273: | first panel exhaust port accommodating groove |
| 1274: | first panel exhaust port | 128: | coupling protrusion |
| 129: | third plate | 130: | shelf |
| 131: | first component coupler (shelf-hanging plate) | | |
| 132: | first part | 1321: | first side wall |
| 1322: | second side wall | 1323: | connecting wall |
| 1324: | through hole | 1325: | contact part |
| 133: | second part | 134: | multi-duct |
| 1341: | shelf-hanging through portion | 1342: | joint cover |
| 1343: | inclined portion | 1344: | insertion portion |
| 1345: | pressurization portion | | |
| 135: | second component coupler (evaporator coupling plate) | | |
| 136: | support portion | 1361: | curling portion |
| 137: | through portion | 138: | hanging portion |
| 139: | contact part | 1391: | first direction movement restriction portion |
| 1392: | second direction movement restriction portion | 140: | drawer guide plate |
| 141**:** | first drawer guide plate | 1411: | first drawer guide |
| 1412: | first storage chamber drawer | 142: | second drawer guide plate |
| 1421: | second drawer guide | 1422: | second storage chamber drawer |
| 143: | third plate | 148: | evaporator |
| 220: | first storage chamber joint | 221: | first joint |
| 222: | second joint | 223: | second storage chamber joint |
| 224: | second joint | 225: | multi-duct |
| 226: | multi-duct cover | 227: | first storage chamber drawer guide |
| 228: | second storage chamber drawer guide | 229: | bolt plate |
| 2291: | bolt | 230: | insulation block |
| 231: | block cover | 232: | insulating material |
| 233: | first insulation block | 234: | opening portion |
| 235: | second insulation block | 236: | third insulation block |
| 237: | drawer insertion portion | 240: | fourth insulation block |
| 241: | second block portion | 2411: | recessed section |
| 2412: | through portion | 242: | first block portion |
| 2421: | drawer insertion portion | 2422: | first panel exhaust port accommodating groove |
| 243: | drawer guide | 2431: | drawer guide plate |
| 244: | forth block portion | 245: | return duct |
| 2451: | first part | 2452: | second part |
| 246: | third plate | | |
| 320: | first storage chamber joint | 321: | first joint |
| 322: | second joint | 323: | insulation block |
| 324: | first insulation block | 325: | second insulation block |
| 326: | opening portion | 327: | partition wall |
| 3271: | multi-duct communication hole | 3272: | return duct communication hole |
| 328: | bolt plate | 3281: | bolt |
| 329: | bracket | 3291: | coupling plate |
| 3292: | first contact plate | 3293: | second contact plate |
| 330: | contact frame | 331: | first plate portion |
| 3311: | first horizontal portion | 3312: | second vertical section |
| 332: | second plate portion | 3321: | second horizontal portion |
| 3322: | second vertical portion | 333: | support portion |
| 3331: | protruding rib | 334: | shelf-hanging plate |
| 335: | first part | 3351: | connecting wall |
| 3352: | through hole | 3353: | side wall |
| 336: | second part | 3361: | coupling hole |
| 420: | second storage chamber joint | 422: | second joint |
| 423: | return duct | 424: | evaporator accommodating portion |
| 425: | cover | 427: | third insulation block |
| 4271: | block cover | 4272: | insulating material |
| 428: | coupling hole | 429: | drawer guide |
| 430: | contact frame | 431: | frame body |
| 432: | frame cover | 433: | first contact frame |
| 433a: | first plate portion | 433b: | second plate portion |
| 4331: | vertical frame portion | 4332: | coupling hole |
| 4333: | horizontal frame portion | 4334: | first horizontal frame portion |
| 4335: | second horizontal frame portion | 434: | second contact frame |
| 435: | coupling rib | 436: | coupling portion |
| 437: | rib accommodating groove | 438: | frame joint groove |
| 439: | fourth insulation block | 440: | fourth block portion |
| 520: | second storage chamber joint | 521: | second joint |
| 522: | insulation block | 523: | third insulation block |
| 530: | contact frame | 531: | coupling portion |
| 532: | frame coupling groove | 533: | connecting frame |
| 534: | second storage chamber drawer guide | 5341: | guide protrusion |
| 5342: | accommodating portion | 539: | fourth insulation block |
| 540: | fourth block portion | | |
| 620: | partition wall | 621: | side guide portion |
| 622: | duct connection portion | 623: | return duct forming portion |
| 624: | insertion groove | | |

## Claims

1. A refrigerator comprising:
a main body including a first plate arranged toward a first storage chamber, a second plate arranged toward an outside of the first storage chamber, and a heat insulator including a vacuum space between the first plate and the second plate; and
a first storage chamber joint.

2. The refrigerator of claim 15, further comprising a fastening tab protruding from one side of the first storage chamber joint and having a fastening hole,
wherein the component coupler includes
a bolt plate mounted in contact with the first plate,
a bolt protruding from the bolt plate and passing through the fastening hole, and
a nut fastened to the bolt.

3. The refrigerator of claim 2, wherein the main body includes a third panel forming a third surface of the refrigerator, a fourth panel forming a fourth surface of the refrigerator, at least two first panels forming a first surface of the refrigerator, and a second panel forming a second surface of the refrigerator,
the first storage chamber is positioned higher than the second storage chamber,
the first storage chamber joint includes a first joint arranged at a corner where the second panel and the third panel are connected and a second joint arranged at a corner portion where the second panel and the first panel are connected and extending from a portion of the first joint, and
the fastening tab protrudes from at least one joint of the first joint and the second joint to cover a portion of the bolt plate.

4. The refrigerator of claim 3, wherein the fastening tab includes
a first fastening tab protruding from one end of the first joint to cover a portion of the bolt plate, and
a second fastening tab protruding from one side of the second joint to cover a portion of the bolt plate and arranged apart from the first coupling portion.

5. The refrigerator of claim 3, further comprising a shelf arranged in the first storage chamber,
wherein the component coupler includes
a plurality of side walls extending from the second panel and protruding from the first plate,
a connecting wall connecting the plurality of side walls and having a through hole such that a rear end of the shelf is caught in a space between the plurality of side walls, and
a shelf fastener protruding in one direction from one of the plurality of side walls to cover the bolt plate.

6. The refrigerator of claim 5, wherein the first storage chamber joint includes an extension rib that protrudes from one corner of the second joint and extends from the second joint, and
the component coupler includes a contact part formed to protrude from another of the plurality of side walls to cover the extension rib.

7. The refrigerator of claim 3, wherein the first storage chamber joint includes a third joint that is arranged at a corner portion where the third panel and the first panel are connected, and is coupled to the first joint and the second joint.

8. The refrigerator of claim 1, wherein the component coupler includes a third plate coupled to the first plate to cover the first storage chamber joint.

9. The refrigerator of claim 15, wherein the first plate is made of a metal material, and
the first storage chamber joint is made of at least one insulating material selected from PU, ABS, and EPS.

10. The refrigerator of claim 15, wherein the main body includes:
a third panel forming a third surface of the refrigerator;
at least two first panels forming a first surface of the refrigerator;
a second panel forming a second surface of the refrigerator; and
a partition wall extending between the at least two first panels and dividing the first storage chamber and the second storage chamber, and
the component coupler includes a contact frame that is fastened to the third panel and the partition wall and mounted on the first storage chamber joint to bring the first storage chamber joint into contact with the corner portion.

11. The refrigerator of claim 10, wherein the first storage chamber joint includes:
a first joint arranged at a corner portion where the second panel and the third panel are connected, and
a second joint arranged at a corner portion where the second panel and the first panel are connected and extending from a portion of the first joint, and
the contact frame includes
a first horizontal portion extending along a surface of the first joint and arranged in surface contact with the surface of the first joint, and
a first vertical portion extending from both ends of the first horizontal portion along a surface of the second joint and arranged in surface contact with the surface of the second joint.

12. The refrigerator of claim 11, wherein the component coupler includes
a bolt plate having a bolt and coupled to the third panel,
a coupling plate arranged to cover the bolt plate and having a fastening hole through which the bolt passes,
a first contact plate extending from the coupling plate to contact with the surface of the first joint, and
a second contact plate extending from the first contact plate to contact with the surface of the first horizontal portion, and
wherein the second contact plate and the first contact plate are configured to urge a portion of the contact frame into contact with the third panel.

13. The refrigerator of claim 11, wherein the component coupler includes a shelf-hanging plate that is formed to protrude integrally from the contact frame and fixes a shelf arranged in the first storage chamber, and
the shelf-hanging plate includes a connecting wall that protrudes in one direction from the first vertical portion, extends along the first vertical portion, and has a through hole through which the rear end of the shelf is caught.

14. The refrigerator of claim 13, wherein the component coupler includes a bolt plate having a bolt and coupled to the second panel,
the shelf-hanging plate includes
a side wall extending from the connecting wall toward the second panel, and
a shelf fastener extending from the side wall, having a fastening hole through which the bolt passes, and fastened to the second panel.

15. The refrigerator of claim 1, wherein the first storage chamber joint further includes
a support that is made of a different material from the first plate, arranged at a corner portion where at least two panels forming the first storage chamber are connected, and configured to support the first plate and the second plate, and
a component coupler fastening the first storage chamber joint to the first plate of the corner portion.
